# EUROPEAN PATENT APPLICATION

(11) **EP 4 808 134 A1**
(43) Date of publication of application: **16.09.2026**
(21) Application number: 25775407.7
(22) Date of filing: 18.02.2025
(51) Int. Cl.: H04N 23/16, H04N 25/611, H04N 1/60

(54) **CAMERA COLOR CALIBRATION METHOD AND APPARATUS, AND ELECTRONIC DEVICE**

(30) Priority: 29.03.2024 CN 202410390097
(71) Applicant: Huawei Technologies Co., Ltd., Shenzhen, Guangdong 518129 (CN)
(72) Inventor: CHENG, Zhen, Shenzhen, Guangdong 518129 (CN); HUANG, Jianhui, Shenzhen, Guangdong 518129 (CN); AO, Huanhuan, Shenzhen, Guangdong 518129 (CN); WANG, Miaofeng, Shenzhen, Guangdong 518129 (CN); CHEN, Chang, Shenzhen, Guangdong 518129 (CN); HU, Xue, Shenzhen, Guangdong 518129 (CN)
(74) Representative: Huawei European IPR
(86) International application number: PCT/CN2025/077835
(87) International publication number: WO 2025/200862

(57) **Abstract**

This application provides a method for camera color calibration, applied to an electronic device. The electronic device includes a camera array (including a first camera) and a high-resolution multispectral camera. The method includes: synchronously capturing raw images of a first scene by using the first camera and the high-resolution multispectral camera, where the first camera captures a three-channel image (a first image), the high-resolution multispectral camera synchronously captures an M-channel image (a second image), and M is a positive integer greater than or equal to 3; converting the second image from the M-channel image to a three-channel image by using a first transformation function; and performing color calibration on the first image by using the three-channel image obtained through conversion as a reference, to obtain a first color parameter used by the first camera to perform color adjustment. In this method, colors of the array camera are calibrated to match colors sensed by the high-resolution multispectral camera, which can improve color authenticity and consistency of images shot by cameras in the camera array.

## Description

This application claims priority to Chinese Patent Application No. 202410390097.5, filed with the China National Intellectual Property Administration on March 29, 2024 and entitled "METHOD AND APPARATUS FOR CAMERA COLOR CALIBRATION, AND ELECTRONIC DEVICE", which is incorporated herein by reference in its entirety.

### TECHNICAL FIELD

Embodiments of this application relate to the field of camera color calibration, and more specifically, to a method and an apparatus for camera color calibration, and an electronic device.

### BACKGROUND

For example, an electronic device is a mobile phone. Cameras of a smartphone are generally presented in a form of camera array. The camera array includes a plurality of cameras. A main difference between these cameras lies in a focal length, and the cameras are mainly classified into an ultra-wide-angle camera, a wide-angle camera (a primary camera), and a long-focus camera. Different mobile phones may be configured with different cameras, but at least two cameras are provided. These cameras can perform imaging independently and have a photographing and recording function. A shot image or a recorded video is directly presented to a user for browsing. Because images shot by different cameras in a same scene are prone to an obvious color difference, photographing experience of the user is severely affected.

### SUMMARY

This application provides a method and an apparatus for camera color calibration, and an electronic device. According to the method, the apparatus, and the electronic device, an image shot by a high-resolution multispectral camera is used as a color reference, to adjust colors of an image shot by each camera in a camera array, so that colors of the array cameras are calibrated to match colors sensed by the high-resolution multispectral camera, and color authenticity of the images shot by the cameras in the camera array can be improved.

According to a first aspect, a method for camera color calibration is provided. The method is applied to an electronic device, the electronic device includes a camera array and a high-resolution multispectral camera, and the method includes: when a first camera and the high-resolution multispectral camera are simultaneously enabled, capturing a first image by using the first camera, where the first image is a raw image of a first scene, the first image is a three-channel image, and the camera array includes the first camera; synchronously capturing a second image by using the high-resolution multispectral camera, where the second image is a multispectral raw image of the first scene, the second image is an M-channel image, and M is a positive integer greater than 3; converting the second image from the M-channel image to a three-channel image by using a first transformation function; performing color calibration on the first image by using the three-channel image obtained by converting the second image as a reference, to obtain a first color parameter; and delivering the first color parameter to an image signal processor ISP pipeline of the first camera, so that the first camera performs, based on the first color parameter, color adjustment on an image captured by the first camera.

In some embodiments, the first color parameter includes any one or more of an auto white balance parameter, a color adjustment parameter, a color calibration parameter, and a 3D lookup table.

In this embodiment of this application, an image shot by the high-resolution multispectral camera is used as a color reference, to adjust colors of an image shot by each camera in the camera array, so that colors of the array cameras are calibrated to match colors sensed by the high-resolution multispectral camera, and color authenticity of the images shot by the cameras in the camera array can be improved.

With reference to the first aspect, in a possible implementation, the camera array further includes a second camera, and the method further includes: capturing a third image by using the second camera, where the third image is a raw image of the first scene, and the third image is a three-channel image; performing color calibration on the third image by using the three-channel image obtained by converting the second image as a reference, to obtain a second color parameter; and delivering the second color parameter to an image signal processor ISP pipeline of the second camera, so that the second camera performs, based on the second color parameter, color adjustment on an image captured by the second camera.

In some embodiments, the first camera, the second camera, and the high-resolution multispectral camera synchronously capture an image of the first scene.

In some other embodiments, the first camera, the second camera, and the high-resolution multispectral camera capture an image of the first scene in a non-synchronized manner within a time threshold.

In this embodiment of this application, the image shot by the high-resolution multispectral camera is used as the color reference, to separately adjust colors of an image shot by each camera in the camera array, so that colors of the array cameras are calibrated to match colors sensed by the high-resolution multispectral camera, and color authenticity and consistency of the images shot by the cameras in the camera array can be improved.

With reference to the first aspect, in a possible implementation, the camera array further includes a second camera, and the method further includes: when the second camera and the high-resolution multispectral camera are simultaneously enabled, capturing a third image by using the second camera, where the third image is a raw image of a second scene, and the third image is a three-channel image; synchronously capturing a fourth image by using the high-resolution multispectral camera, where the fourth image is a multispectral raw image of the second scene, and the fourth image is an M-channel image; converting the fourth image from the M-channel image to a three-channel image by using a second transformation function; performing color calibration on the third image by using the three-channel image obtained by converting the fourth image as a reference, to obtain a second color parameter; and delivering the second color parameter to an image signal processor ISP pipeline of the second camera, so that the second camera performs, based on the second color parameter, color adjustment on an image captured by the second camera.

In some embodiments, the second color parameter includes any one or more of an auto white balance parameter, a color adjustment parameter, a color calibration parameter, and a 3D lookup table.

In this embodiment of this application, the image shot by the high-resolution multispectral camera is used as the color reference, to separately adjust colors of an image shot by each camera in the camera array, so that colors of the array cameras are calibrated to match colors sensed by the high-resolution multispectral camera, and color authenticity and consistency of the images shot by the cameras in the camera array can be improved.

With reference to the first aspect, in a possible implementation, the camera array further includes a third camera, and the method further includes: when the third camera and the high-resolution multispectral camera are simultaneously enabled, capturing a fifth image by using the third camera, where the fifth image is a raw image of the first scene, and the fifth image is a three-channel image; synchronously capturing a sixth image by using the high-resolution multispectral camera, where the sixth image is a multispectral raw image of the first scene, the sixth image is an M-channel image, and M is a positive integer greater than 3; converting the sixth image from the M-channel image to a three-channel image by using a third transformation function; performing color calibration on the fifth image by using the three-channel image obtained by converting the sixth image as a reference, to obtain a third color parameter; and delivering the third color parameter to an image signal processor ISP pipeline of the third camera, so that the third camera performs, based on the third color parameter, color adjustment on an image captured by the third camera.

In some embodiments, the third color parameter includes any one or more of an auto white balance parameter, a color adjustment parameter, a color calibration parameter, and a 3D lookup table.

In some embodiments, the first camera is one of a primary camera, an ultra-wide-angle camera, and a long-focus camera, the second camera is one of a primary camera, an ultra-wide-angle camera, and a long-focus camera, and the third camera is one of a primary camera, an ultra-wide-angle camera, and a long-focus camera. The first camera, the second camera, and the third camera are different from each other.

In some embodiments, the first camera is a primary camera (a wide-angle camera), the second camera is an ultra-wide-angle camera, and the third camera is a long-focus camera.

In this embodiment of this application, the image shot by the high-resolution multispectral camera is used as the color reference, to separately adjust colors of an image shot by each camera in the camera array, so that colors of the array cameras are calibrated to match colors sensed by the high-resolution multispectral camera, and color authenticity and consistency of the images shot by the cameras in the camera array can be improved.

With reference to the first aspect, in a possible implementation, converting the second image from the M-channel image to the three-channel image by using the first transformation function includes: converting the second image from the M-channel image to the three-channel image by downsampling M channels of the second image to three channels of the first image based on the first transformation function, where the first transformation function is a function that performs matrix multiplication between the second image and a downsampling matrix with a size of M×3.

In some embodiments, a further explanation of "converting the fourth image from the M-channel image to a three-channel image by using a second transformation function" is similar to the foregoing explanation of "converting the second image from the M-channel image to a three-channel image by using a first transformation function".

In some embodiments, a further explanation of "converting the sixth image from the M-channel image to a three-channel image by using a third transformation function" is similar to the foregoing explanation of "converting the second image from the M-channel image to a three-channel image by using a first transformation function".

In this embodiment of this application, the M channels of the second image are downsampled to three channels by using the downsampling matrix, to establish a mapping relationship between the second image and color space of an image obtainable by the first camera. Because a quantity of color channels included in the second image is M, and included spectral information is more abundant than spectral information corresponding to the first image, the three-channel image obtained by mapping the second image to the color space of the image obtainable by the first camera is closer to true colors of the first scene. In this way, color adjustment can be performed on the first image by using the image obtained after downsampling is performed on the channels of the second image, thereby improving color authenticity and consistency of the image shot by the first camera.

With reference to the first aspect, in a possible implementation, before converting the second image from the M-channel image to the three-channel image by using the first transformation function, the method further includes: performing field of view FOV alignment on the first image and the second image.

In some embodiments, before converting the fourth image from the M-channel image to the three-channel image by using the second transformation function, the method further includes: performing field of view FOV alignment on the third image and the fourth image.

In some embodiments, before converting the sixth image from the M-channel image to the three-channel image by using the third transformation function, the method further includes: performing field of view FOV alignment on the fifth image and the sixth image.

In this embodiment of this application, before the second image is converted from the M-channel image to the three-channel image (that is, the mapping relationship between the second image and the color space of the image obtainable by the first camera is established), field of view alignment is first performed on the first image and the second image, so that impact on authenticity and consistency of color adjustment of the first image, resulting from a field of view difference between the first image and the second image, can be avoided.

With reference to the first aspect, in a possible implementation, the method further includes: determining the first transformation function based on the FOV-aligned second image.

In some embodiments, the method further includes: determining the second transformation function based on the FOV-aligned fourth image.

In some embodiments, the method further includes: determining the third transformation function based on the FOV-aligned sixth image.

In some embodiments, an estimation method for the downsampling matrix used by the first transformation function may be any one of a Bayesian method, a least square method, or a deep learning method, or may be another estimation method.

With reference to the first aspect, in a possible implementation, converting the second image from the M-channel image to the three-channel image by using the first transformation function includes: performing spectral super-resolution on the second image based on a spectral sensitivity curve corresponding to the second image, to obtain a hyperspectral image corresponding to the second image, where the hyperspectral image corresponding to the second image is an N-channel image, and N is a positive integer far greater than M; and converting, based on the first transformation function, the hyperspectral image corresponding to the second image from the N-channel image to the three-channel image by downsampling N channels of the hyperspectral image corresponding to the second image to three channels of the first image, where the first transformation function is a function that performs matrix multiplication between the second image and a downsampling matrix with a size of N×3.

In some embodiments, a further explanation of "converting the fourth image from the M-channel image to a three-channel image by using a second transformation function" is similar to the foregoing explanation of "converting the second image from the M-channel image to a three-channel image by using a first transformation function".

In some embodiments, a further explanation of "converting the sixth image from the M-channel image to a three-channel image by using a third transformation function" is similar to the foregoing explanation of "converting the second image from the M-channel image to a three-channel image by using a first transformation function".

In this embodiment of this application, the N channels of the hyperspectral image of the second image are downsampled to three channels by using the downsampling matrix, to establish a mapping relationship between the hyperspectral image of the second image and color space of an image obtainable by the first camera. Because a quantity of color channels included in the hyperspectral image of the second image is N, and included spectral information is more abundant than spectral information corresponding to the first image, the three-channel image obtained by mapping the hyperspectral image of the second image to the color space of the image obtainable by the first camera is closer to true colors of the first scene. In this way, color adjustment can be performed on the first image by using the image obtained after downsampling is performed on the channels of the hyperspectral image of the second image, thereby improving color authenticity and consistency of the image shot by the first camera.

With reference to the first aspect, in a possible implementation, the method further includes: determining the first transformation function based on the hyperspectral image corresponding to the second image and a spectral sensitivity curve corresponding to the first image.

In some embodiments, the method further includes: determining the second transformation function based on a hyperspectral image corresponding to the fourth image and a spectral sensitivity curve corresponding to the third image.

In some embodiments, the method further includes: determining the third transformation function based on a hyperspectral image corresponding to the sixth image and a spectral sensitivity curve corresponding to the fifth image.

In some embodiments, an estimation method for the downsampling matrix used by the first transformation function/the second transformation function/the third transformation function may be any one of a Bayesian method, a least square method, or a deep learning method, or may be another estimation method.

According to a second aspect, an electronic device is provided. The electronic device includes a camera array, a high-resolution multispectral camera, and a processor, and the camera array includes a first camera. The first camera is configured to capture a first image when the first camera and the high-resolution multispectral camera are simultaneously enabled, the first image is a raw image of a first scene, and the first image is a three-channel image. The high-resolution multispectral camera is configured to synchronously capture a second image, the second image is a multispectral raw image of the first scene, the second image is an M-channel image, and M is a positive integer greater than 3. The processor is configured to convert the second image from the M-channel image to a three-channel image by using a first transformation function. The processor is further configured to perform color calibration on the first image by using the three-channel image obtained by converting the second image as a reference, to obtain a first color parameter. The processor is further configured to deliver the first color parameter to an image signal processor ISP pipeline of the first camera, so that the first camera can perform, based on the first color parameter, color adjustment on an image captured by the first camera.

In some embodiments, the first color parameter includes any one or more of an auto white balance parameter, a color adjustment parameter, a color calibration parameter, and a 3D lookup table.

In this embodiment of this application, an image shot by the high-resolution multispectral camera is used as a color reference, to adjust colors of an image shot by each camera in the camera array, so that colors of the array cameras are calibrated to match colors sensed by the high-resolution multispectral camera, and color authenticity of the images shot by the cameras in the camera array can be improved.

With reference to the second aspect, in a possible implementation, the camera array further includes a second camera. The second camera is configured to capture a third image, the third image is a raw image of the first scene, and the third image is a three-channel image. The processor is further configured to perform color calibration on the third image by using the three-channel image obtained by converting the second image as a reference, to obtain a second color parameter. The processor is further configured to deliver the second color parameter to an image signal processor ISP pipeline of the second camera, so that the second camera performs, based on the second color parameter, color adjustment on an image captured by the second camera.

In some embodiments, the first camera, the second camera, and the high-resolution multispectral camera synchronously capture an image of the first scene.

In some other embodiments, the first camera, the second camera, and the high-resolution multispectral camera capture an image of the first scene in a non-synchronized manner within a time threshold.

In this embodiment of this application, the image shot by the high-resolution multispectral camera is used as the color reference, to separately adjust colors of an image shot by each camera in the camera array, so that colors of the array cameras are calibrated to match colors sensed by the high-resolution multispectral camera, and color authenticity and consistency of the images shot by the cameras in the camera array can be improved.

With reference to the second aspect, in a possible implementation, the camera array further includes a second camera. The second camera is configured to: when the second camera and the high-resolution multispectral camera are simultaneously enabled, capture a third image by using the second camera, the third image is a raw image of a second scene, and the third image is a three-channel image. The high-resolution multispectral camera is further configured to synchronously capture a fourth image, the fourth image is a multispectral raw image of the second scene, and the fourth image is an M-channel image. The processor is further configured to convert the fourth image from the M-channel image to a three-channel image by using a second transformation function. The processor is further configured to perform color calibration on the third image by using the three-channel image obtained by converting the fourth image as a reference, to obtain a second color parameter. The processor is further configured to deliver the second color parameter to an image signal processor ISP pipeline of the second camera, so that the second camera can perform, based on the second color parameter, color adjustment on an image captured by the second camera.

In some embodiments, the second color parameter includes any one or more of an auto white balance parameter, a color adjustment parameter, a color calibration parameter, and a 3D lookup table.

In this embodiment of this application, the image shot by the high-resolution multispectral camera is used as the color reference, to separately adjust colors of an image shot by each camera in the camera array, so that colors of the array cameras are calibrated to match colors sensed by the high-resolution multispectral camera, and color authenticity and consistency of the images shot by the cameras in the camera array can be improved.

With reference to the second aspect, in a possible implementation, the camera array further includes a third camera. The third camera is configured to: when the third camera and the high-resolution multispectral camera are simultaneously enabled, capture a fifth image by using the third camera, the fifth image is a raw image of the first scene, and the fifth image is a three-channel image. The high-resolution multispectral camera is further configured to synchronously capture a sixth image, the sixth image is a multispectral raw image of the first scene, the sixth image is an M-channel image, and M is a positive integer greater than 3. The processor is further configured to convert the sixth image from the M-channel image to a three-channel image by using a third transformation function. The processor is further configured to perform color calibration on the fifth image by using the three-channel image obtained by converting the sixth image as a reference, to obtain a third color parameter. The processor is further configured to deliver the third color parameter to an image signal processor ISP pipeline of the third camera, so that the third camera can perform, based on the third color parameter, color adjustment on an image captured by the third camera.

In some embodiments, the third color parameter includes any one or more of an auto white balance parameter, a color adjustment parameter, a color calibration parameter, and a 3D lookup table.

In some embodiments, the first camera is one of a primary camera, an ultra-wide-angle camera, and a long-focus camera, the second camera is one of a primary camera, an ultra-wide-angle camera, and a long-focus camera, and the third camera is one of a primary camera, an ultra-wide-angle camera, and a long-focus camera. The first camera, the second camera, and the third camera are different from each other.

In some embodiments, the first camera is a primary camera (a wide-angle camera), the second camera is an ultra-wide-angle camera, and the third camera is a long-focus camera.

In this embodiment of this application, the image shot by the high-resolution multispectral camera is used as the color reference, to separately adjust colors of an image shot by each camera in the camera array, so that colors of the array cameras are calibrated to match colors sensed by the high-resolution multispectral camera, and color authenticity and consistency of the images shot by the cameras in the camera array can be improved.

With reference to the second aspect, in a possible implementation, the processor is specifically configured to convert the second image from the M-channel image to the three-channel image by downsampling M channels of the second image to three channels of the first image based on the first transformation function, where the first transformation function is a function that performs matrix multiplication between the second image and a downsampling matrix with a size of M×3.

In this embodiment of this application, the M channels of the second image are downsampled to three channels by using the downsampling matrix, to establish a mapping relationship between the second image and color space of an image obtainable by the first camera. Because a quantity of color channels included in the second image is M, and included spectral information is more abundant than spectral information corresponding to the first image, the three-channel image obtained by mapping the second image to the color space of the image obtainable by the first camera is closer to true colors of the first scene. In this way, color adjustment can be performed on the first image by using the image obtained after downsampling is performed on the channels of the second image, thereby improving color authenticity and consistency of the image shot by the first camera.

With reference to the second aspect, in a possible implementation, the processor is further specifically configured to: before converting the second image from the M-channel image to the three-channel image by using the first transformation function, perform field of view FOV alignment on the first image and the second image.

In this embodiment of this application, before the second image is converted from the M-channel image to the three-channel image (that is, the mapping relationship between the second image and the color space of the image obtainable by the first camera is established), field of view alignment is first performed on the first image and the second image, so that impact on authenticity and consistency of color adjustment of the first image, resulting from a field of view difference between the first image and the second image, can be avoided.

With reference to the second aspect, in a possible implementation, the processor is further configured to determine the first transformation function based on the FOV-aligned second image.

In some embodiments, an estimation method for the downsampling matrix used by the first transformation function may be any one of a Bayesian method, a least square method, or a deep learning method, or may be another estimation method.

With reference to the second aspect, in a possible implementation, the processor is specifically configured to: perform spectral super-resolution on the second image based on a spectral sensitivity curve corresponding to the second image, to obtain a hyperspectral image corresponding to the second image, where the hyperspectral image corresponding to the second image is an N-channel image, and N is a positive integer far greater than M; and convert, based on the first transformation function, the hyperspectral image corresponding to the second image from the N-channel image to the three-channel image by downsampling N channels of the hyperspectral image corresponding to the second image to three channels of the first image, where the first transformation function is a function that performs matrix multiplication between the second image and a downsampling matrix with a size of N×3.

In this embodiment of this application, the N channels of the hyperspectral image of the second image are downsampled to three channels by using the downsampling matrix, to establish a mapping relationship between the hyperspectral image of the second image and color space of an image obtainable by the first camera. Because a quantity of color channels included in the hyperspectral image of the second image is N, and included spectral information is more abundant than spectral information corresponding to the first image, the three-channel image obtained by mapping the hyperspectral image of the second image to the color space of the image obtainable by the first camera is closer to true colors of the first scene. In this way, color adjustment can be performed on the first image by using the image obtained after downsampling is performed on the channels of the hyperspectral image of the second image, thereby improving color authenticity and consistency of the image shot by the first camera.

With reference to the second aspect, in a possible implementation, the processor is further configured to determine the first transformation function based on the hyperspectral image corresponding to the second image and a spectral sensitivity curve corresponding to the first image.

According to a third aspect, an electronic device is provided. The electronic device includes a memory and a processor. The memory is configured to store computer program code. The processor is configured to execute the computer program code stored in the memory, to implement the method according to any one of the first aspect or the possible implementations of the first aspect.

According to a fourth aspect, a computer-readable storage medium is provided. The computer-readable storage medium stores a computer program or instructions. When the computer program or the instructions are executed, the method according to any one of the first aspect or the possible implementations of the first aspect is implemented.

According to a fifth aspect, a chip is provided. The chip stores instructions. When the instructions are run on a device, the chip is enabled to perform the method according to any one of the first aspect or the possible implementations of the first aspect.

According to a sixth aspect, a computer program product is provided. The computer program product stores a computer program or instructions. When the computer program or the instructions are executed, the method according to any one of the first aspect or the possible implementations of the first aspect is implemented.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3 is a diagram of an array camera according to an embodiment of this application;
FIG. 4 is a schematic flowchart of a method for camera color calibration;
FIG. 5 is a schematic flowchart of another method for camera color calibration;
FIG. 6 is a diagram of another array camera according to an embodiment of this application;
FIG. 7 is a diagram of a structure of a single-point multispectral camera according to an embodiment of this application;
FIG. 8 is a schematic flowchart of a method for performing camera color calibration by using a single-point multispectral camera according to an embodiment of this application;
FIG. 9 is a diagram of an RGGB sensor mode according to an embodiment of this application;
FIG. 10 is a diagram of spectral sensing of a high-resolution multispectral component according to an embodiment of this application;
FIG. 11 is a schematic flowchart of a method for camera color calibration according to an embodiment of this application;
FIG. 12(a), FIG. 12(b), and FIG. 12(c) are a schematic flowchart of another method for camera color calibration according to an embodiment of this application;
FIG. 13 is a diagram of a system framework corresponding to a method for camera color calibration according to an embodiment of this application;
FIG. 14 is a schematic flowchart corresponding to another method for camera color calibration according to an embodiment of this application; and
FIG. 15 is a schematic flowchart corresponding to another method for camera color calibration according to an embodiment of this application.

### DESCRIPTION OF EMBODIMENTS

The following describes technical solutions of this application with reference to accompanying drawings. It is clear that the described embodiments are merely some but not all of embodiments of this application.

The following describes the technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, "multiple" or "a plurality of" means two or more.

Terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification means that one or more embodiments of this application include a specific feature, structure, or characteristic described with reference to embodiments. Therefore, statements such as "an embodiment", "some embodiments", "another embodiment", and "some other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

The method provided in embodiments of this application may be applied to an electronic device having a time display function or a time recognition function, for example, may be applied to an electronic device like a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a smart home device. A specific type of the electronic device is not limited in embodiments of this application.

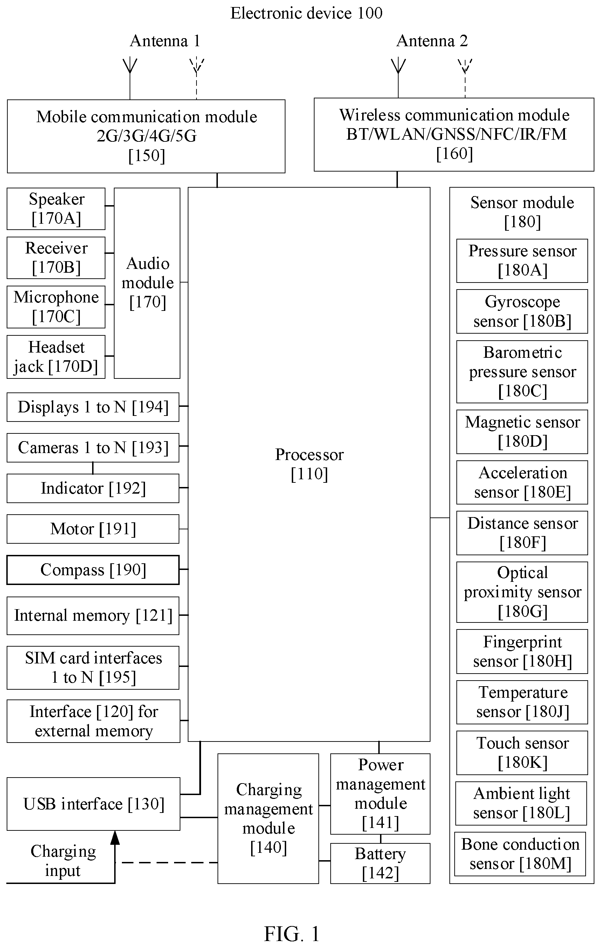

For example, FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may alternatively be configured to connect to another electronic device, for example, an AR device.

It may be understood that an interface connection relationship between modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric calculation, and is configured to perform graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and a light ray is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by drawing on a structure of a biological neural network, for example, by drawing on a transfer mode between human brain neurons, and may further continuously perform self-learning. Applications such as intelligent cognition of the electronic device 100, for example, image recognition, facial recognition, speech recognition, and text understanding, may be implemented through the NPU.

The interface 120 for external memory may be used to connect to an external memory card, for example, a micro SD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an app required by at least one function (for example, a sound playing function or an image playing function), and the like. The data storage area may store data (for example, audio data or an address book) and the like created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode through the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, thereby implementing a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The button 190 includes a power button, a volume button, or the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may also be compatible with an external memory card. The electronic device 100 interacts with a network through the SIM card, to implement functions such as calling and data communication. In some embodiments, the electronic device 100 uses an embedded-SIM (embedded-SIM, eSIM) card, namely, an embedded SIM card. The eSIM card may be embedded into the electronic device 100, and cannot be separated from the electronic device 100.

It should be understood that a phone card in this embodiment of this application includes but is not limited to a SIM card, an eSIM card, a universal subscriber identity module (universal subscriber identity module, USIM), a universal integrated circuit card (universal integrated circuit card, UICC), and the like.

A software system of the electronic device 100 may use a layered architecture, an event-driven architecture, a microkernel architecture, a micro service architecture, or a cloud architecture. In this embodiment of this application, an Android system with a layered architecture is used as an example to describe a software structure of the electronic device 100.

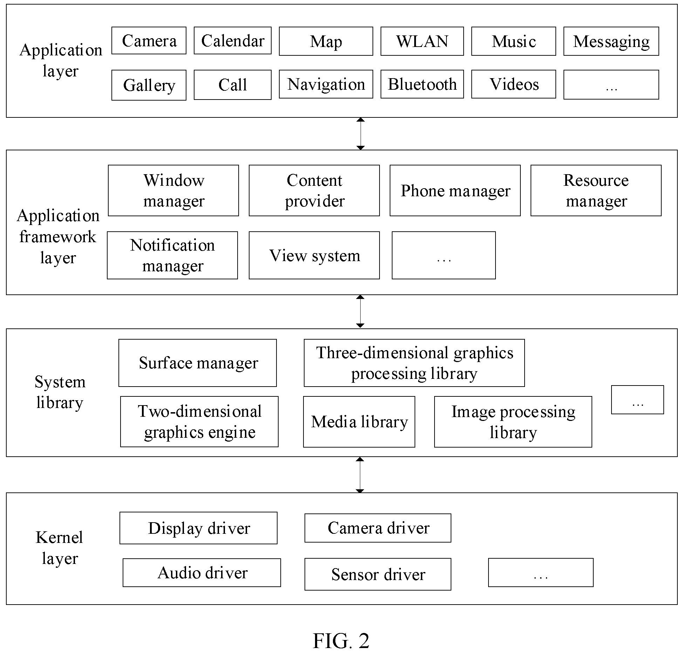

FIG. 2 is a block diagram of the software structure of the electronic device 100 in this embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and a system library, and a kernel layer from top to bottom. The application layer may include a series of application packages.

As shown in FIG. 2, an application package may include applications such as Camera, Gallery, Calendar, Call, Map, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a view for displaying a text and a view for displaying an image.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display, in the status bar, notification information, which may be used for conveying a notification-type message that may automatically disappear after a short pause without user interaction. For example, the notification manager is configured to: notify download completion, give a message notification, and the like. The notification manager may alternatively be a notification that appears in a top status bar of the system in a form of graph or scroll bar text, for example, a notification of an application that is run on a background, or may be a notification that appears on the screen in a form of dialog window. For example, text information is displayed in the status bar, an alert tone is made, the electronic device vibrates, or an indicator light blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to: manage a display subsystem and provide fusion of a 2D layer and a 3D layer for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

The technical solutions in embodiments of this application may be applied to an image processing scenarios involving a plurality of cameras. For example, the technical solutions may be applied to a scenario like color calibration for an image captured by an array camera.

The electronic device may be a television, a desktop computer, or a notebook computer, or may be a portable electronic device, for example, a mobile phone, a foldable display, a tablet computer, a camera, a video camera, or a video recorder, or may be a smart home device, for example, any electronic device having a plurality of cameras, such as a refrigerator, a washing machine, or a sweeper, or may be an electronic device in a 5G network, or an electronic device in a future evolved public land mobile network (public land mobile network, PLMN).

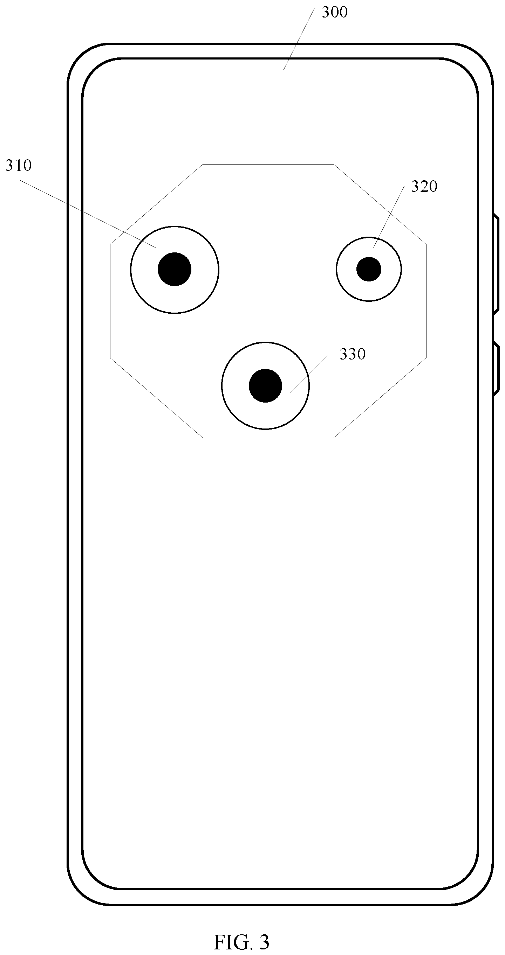

For example, FIG. 3 is a diagram of a camera setting according to an embodiment of this application.

As shown in FIG. 3, a camera array is disposed on an electronic device 300, and the camera array includes a camera 310, a camera 320, and a camera 330.

In some embodiments, the camera 310 is an ultra-wide-angle camera, the camera 320 is a wide-angle camera and also a primary camera, and the camera 330 is a long-focus camera.

For example, the electronic device is a mobile phone. Cameras of a smartphone are generally presented in a form of camera array. The camera array includes a plurality of cameras. A main difference between these cameras lies in a focal length, and the cameras are mainly classified into an ultra-wide-angle camera, a wide-angle camera (a primary camera), and a long-focus camera. Different mobile phones may be configured with different cameras, but at least two cameras are provided. These cameras can perform imaging independently and have a photographing and recording function. A shot image or a recorded video is directly presented to a user for browsing. Because images shot by different cameras in a same scene are prone to an obvious color difference, photographing experience of the user is severely affected. Therefore, the user has a high requirement on color consistency of images shot by the cameras in the camera array.

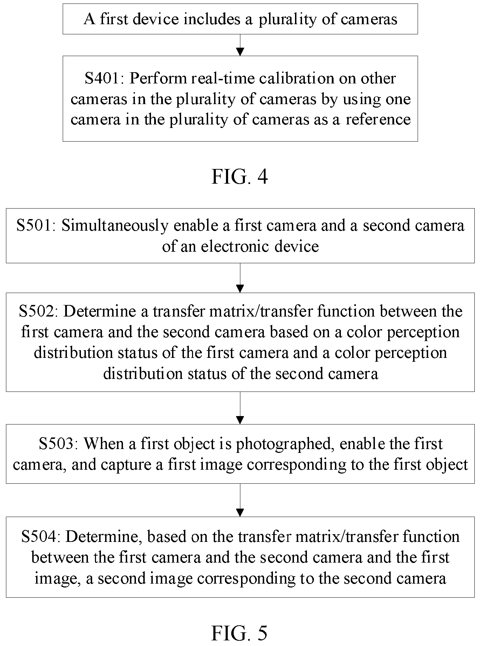

For example, FIG. 4 is a schematic flowchart of a method 400 for camera color calibration. The method is a method for simultaneously enabling a plurality of cameras. As shown in FIG. 4, the method 400 includes the following steps.

S401: Perform real-time calibration on other cameras in the plurality of cameras by using one camera (usually a primary camera) in the plurality of cameras disposed on a first device as a reference.

The plurality of cameras are all three-channel cameras. That is, images captured by the plurality of cameras are all three-channel images.

Specifically, one of the plurality of cameras disposed on the first device may be used as a reference, to separately perform real-time calibration on each of the other cameras in the plurality of cameras.

Real-time calibration is performed on colors of an image captured by the camera.

In this method, different camera modules have differences in a plurality of dimensions such as a photographing field of angle (FOV), photographing brightness, photographing contrast, a photographing dynamic range, and spectral response consistency of sensors. Consequently, when one of the plurality of cameras is used as a reference to calibrate another camera, accuracy of color calibration for an image shot by the camera is low because the differences between the cameras are not well considered. In addition, at least two cameras need to be simultaneously enabled in the calibration process, resulting in high power consumption.

For example, FIG. 5 is a schematic flowchart of another method 500 for camera color calibration. The method is an offline calibration method. As shown in FIG. 5, the method 500 includes the following steps.

S501: Simultaneously enable a first camera and a second camera of an electronic device, where the first camera serves as a reference camera for calibrating the second camera.

The first camera and the second camera are both three-channel cameras. That is, images captured by the first camera and the second camera are both three-channel images.

S502: Determine a transfer matrix/transfer function between the first camera and the second camera based on a color perception distribution status of the first camera and a color perception distribution status of the second camera.

It may be understood that S501 and S502 are a process of calibrating the second camera by using the first camera as a reference. After calibration is completed (that is, after the transfer matrix/transfer function between the first camera and the second camera is obtained), the first camera and the second camera are disabled.

S503: When a first object is photographed by using the first camera, enable the first camera, and capture, by using the first camera, a first image corresponding to the first object.

S504: Determine, based on the transfer matrix/transfer function between the first camera and the second camera and the first image, a second image corresponding to the second camera.

Specifically, when the first object is photographed by using the first camera, the first camera is enabled. The first camera estimates a current scene spectrum, determines a corresponding module transfer parameter based on the transfer matrix/transfer function between the first camera and the second camera, and then determines, based on the module transfer parameter and the first image, the second image corresponding to the second camera.

In this method, because it is difficult to estimate a scene spectrum, and a scene color cannot be precisely sensed, it is difficult to determine an appropriate module transfer parameter, and consequently, accuracy of camera color calibration is low.

In conclusion, it may be learned that, in all current methods for camera color calibration, there are problems of low accuracy of camera color calibration and high calibration costs (labor costs and power consumption costs), and images shot by cameras in a camera array exhibit color inconsistency and color inauthenticity.

In view of this, embodiments of this application provide a method and an apparatus for camera color calibration, and an electronic device. In this method, a high-resolution multispectral camera is disposed on the electronic device, and color calibration is performed on a camera in a camera array disposed on the electronic device by using an image captured by the high-resolution multispectral camera as a reference, so that a problem of inaccurate calibration caused by calibration between array cameras can be avoided, and accuracy and stability of camera color calibration can be improved. In this way, images output by a plurality of cameras in the camera array exhibit higher color consistency and authenticity. In addition, a size of the high-resolution multispectral camera is small, which can further reduce an architecture redundancy degree of the electronic device, reduce power consumption generated in a calibration process, reduce calibration costs, and further improve photographing experience of a user.

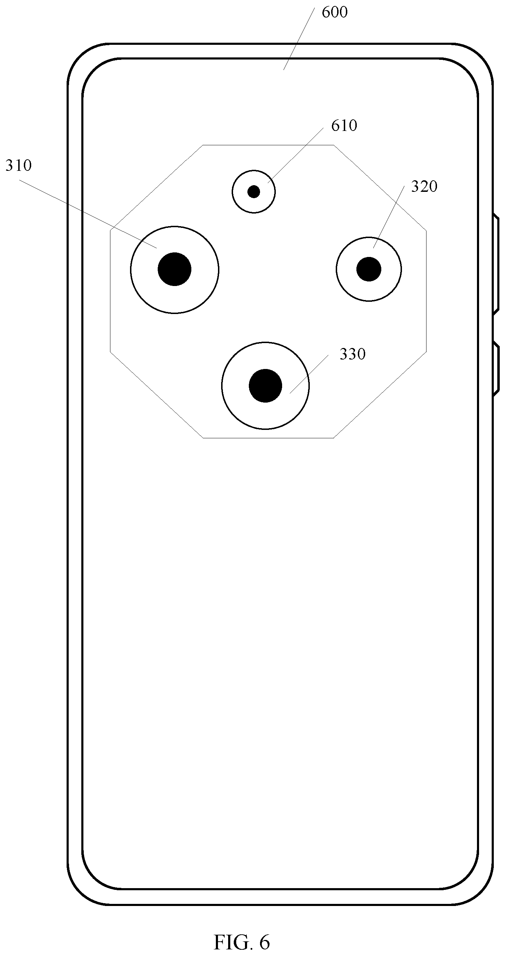

For example, FIG. 6 is a diagram of another camera setting according to an embodiment of this application.

As shown in FIG. 6, a camera array and a high-resolution multispectral camera 610 are disposed on an electronic device 600, and the camera array includes a camera 310, a camera 320, and a camera 330.

In some embodiments, the camera 310 is an ultra-wide-angle camera, the camera 320 is a wide-angle camera and also a primary camera, and the camera 330 is a long-focus camera.

A spectral sensing capability of the high-resolution multispectral camera is far superior to those of the ultra-wide-angle camera, the wide-angle camera, and the long-focus camera. In some embodiments, the solution in this embodiment of this application may be understood as follows: A multispectral image that is of a first scene and that is captured by the high-resolution multispectral camera 610 is used as a reference, to separately perform color calibration on red-green-blue (red-green-blue, RGB) images that are of the first scene and that are captured by the ultra-wide-angle camera 310, the wide-angle camera 320, and the long-focus camera 330.

It should be understood that this embodiment is merely an example of a camera setting manner. The high-resolution multispectral camera 610 may be disposed independently of the camera array, or may be disposed in the camera array. A manner of disposing the high-resolution multispectral camera 610 on the electronic device is not limited in this application.

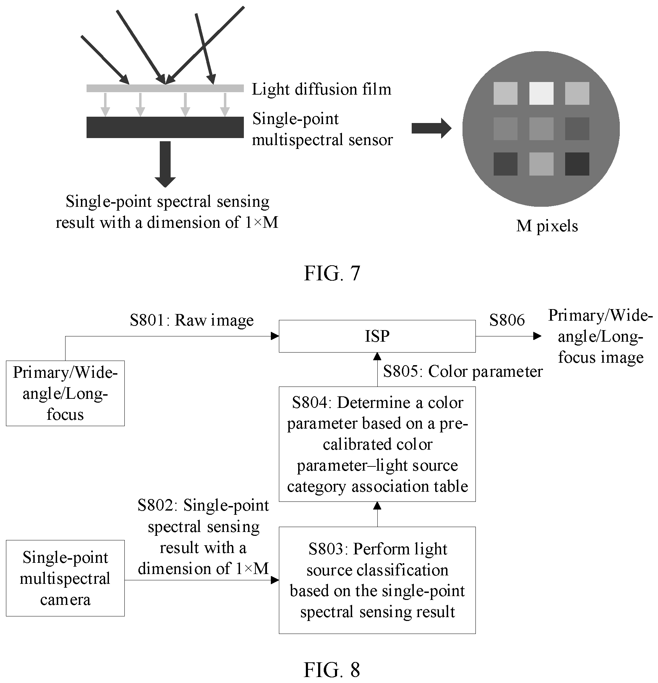

To better understand advantages of using a high-resolution multispectral camera in camera color calibration, for example, with reference to FIG. 7 and FIG. 8, a process of performing camera color calibration by using a single-point multispectral camera is described in detail.

FIG. 7 is a diagram of a structure of a single-point multispectral camera. As shown in FIG. 7, the single-point multispectral camera includes a light diffusion film and a single-point multispectral sensor that are disposed in parallel. Light rays coming from different directions pass through the light diffusion film. Due to an averaging effect of the light diffusion film, light rays exiting the light diffusion film have same amplitude and a same exit angle. The exiting light rays pass through the single-point multispectral sensor to sense an average reflectance spectrum of a scene. After passing through the single-point multispectral sensor, a plurality of light rays exiting the light diffusion film output a single-point spectral sensing result with a dimension of 1×M, that is, a vector with a dimension of 1×M. Because the single-point spectral sensing result with the dimension of 1×M has only one point (that is, a single point) that is globally averaged in space and has spectral dimension resolution, spatial correspondence cannot be performed, and a specific spatial location of each array camera corresponding to the single point cannot be determined. Therefore, a spectral band downsampling mapping function cannot be estimated (that is, conversion from a multi-channel image to a three-channel image cannot be performed).

Further, FIG. 8 is a schematic flowchart of a method 800 for performing camera color calibration by using a single-point multispectral camera. As shown in FIG. 8, the method 800 includes the following steps.

S801: A primary/wide-angle/long-focus camera captures a raw image of a current scene.

S802: The single-point camera synchronously obtains a single-point spectral sensing result of the current scene, where the single-point spectral sensing result is a single-point spectral sensing result with a dimension of 1×M.

S803: Perform light source classification based on the single-point spectral sensing result, that is, determine a light source category of the current scene.

In light source classification performed based on the single-point spectral sensing result, the determined light source category has problems of low precision and limited scenes.

S804: Determine a color parameter based on the light source category of the current scene and a pre-calibrated color parameter-light source category association table.

The pre-calibrated color parameter-light source category association table is a pre-calibrated color parameter-light source category association table that maps the wide-angle/long-focus to the primary camera.

S805: Deliver the determined color parameter to an ISP pipeline of the primary/wide-angle/long-focus camera.

S806: Perform color adjustment on the wide-angle/long-focus camera based on the color parameter.

In this method, light source classification is performed based on the single-point spectral sensing result, and the determined light source category has problems of low precision and limited scenes. Therefore, camera color calibration performed by using the single-point multispectral camera is discrete, inaccurate, and non-robust, and is prone to interference from a mixed light source. Consequently, precise color calibration cannot be achieved, and color consistency across a plurality of cameras cannot be implemented.

Therefore, for the technical problem existing in the single-point multispectral camera, in embodiments of this application, a high-resolution multispectral camera (a multi-point multispectral camera) is used to perform camera color calibration. To better understand the method for camera color calibration provided in embodiments of this application, the following first describes in detail the high-resolution multispectral camera (or referred to as a high-resolution multispectral component).

Currently, a structure of an image sensor used on an electronic device is basically a Bayer pattern (Bayer Pattern) structure. A basic color pixel includes four pixels arranged in a 2×2 array, and three types of color filters of different colors (for example, red, green, and blue RGB, or red, yellow, and blue RYB) are placed on the basic color pixel, to form an RGGB sensor or an RYYB sensor, or form a color sensing unit similar to the RGGB sensor or the RYYB sensor. The entire image sensor includes a large quantity of color sensing units arranged in rows and columns.

The RGGB is a color pattern, which is a mosaic color filter array formed by arranging RGB color filters on a grid of a light sensing assembly. In this arrangement, 50% of the color filters are green, 25% of the color filters are red, and the other 25% of the color filters are blue. The RYYB sensor alters an underlying filter arrangement manner of the RGGB array by replacing the two green pixels (G) with two yellow pixels (Y), forming the RYYB sensor.

A difference between the high-resolution multispectral component and the RGGB device and the RYYB device mainly lies in that a color sensing unit of the high-resolution multispectral component has more spectral sensitivity functions (that is, has more spectral bands). Specifically, a quantity of spectral sensitivity functions (that is, a quantity of spectral bands) of both the RGGB device and the RYYB device is 3 (red, green, and blue, or red, yellow, and blue), and a quantity of spectral sensitivity functions of the high-resolution multispectral component is greater than 3. For example, there may be nine spectral bands arranged in a 3×3 array. Therefore, the high-resolution multispectral component can obtain a spectral sensing capability far superior to that of three channels without significantly reducing spatial resolution. That is, compared with the RGGB device and the RYYB device that have a three-channel spectral sensing capability, the high-resolution multispectral component has a superior spectral sensing capability, so that a sensed multispectral image has higher color authenticity.

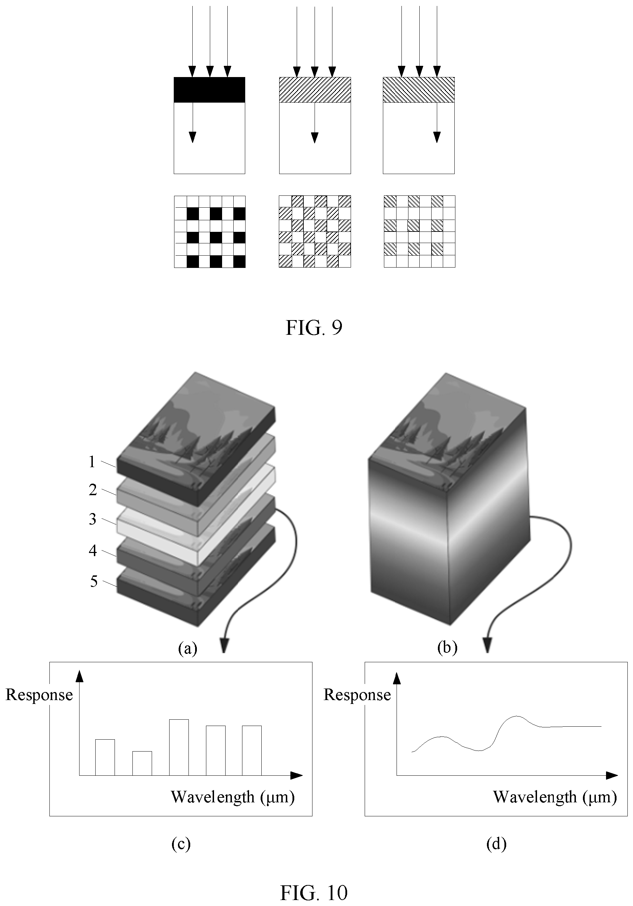

For example, taking the RGGB device as an example, FIG. 9 is a diagram of spectral sensing of a three-channel spectral device according to an embodiment of this application.

As shown in FIG. 9, black filling represents red, hatching with lines slanting downward to the left (from high to low) represent green, and hatching with lines slanting downward to the right (from high to low) represent blue. In the RGGB device, RGB color filters are arranged on a grid of a light sensing assembly to form a mosaic color filter array. In this arrangement, 50% of the color filters are green, 25% of the color filters are red, and the other 25% of the color filters are blue. A spectral sensing capability corresponding to the RGGB device is a three-channel (red, green, and blue) spectral sensing capability.

For example, FIG. 10 is a diagram of spectral sensing of a high-resolution multispectral component according to an embodiment of this application.

As shown in (a) in FIG. 10, in an embodiment, a quantity of spectral bands sensed by the high-resolution multispectral component is 5. These bands, for example, may include red (marked as 1 in (a) in FIG. 10), orange (marked as 2 in (a) in FIG. 10), yellow (marked as 3 in (a) in FIG. 10), blue (marked as 4 in (a) in FIG. 10), and purple (marked as 5 in (a) in FIG. 10), and a corresponding multispectral response curve may be, for example, shown in (c) in FIG. 10. The multispectral band sensed by the high-resolution multispectral component shown in (a) in FIG. 10 may be converted into a hyperspectral band shown in (b) in FIG. 10, and a corresponding hyperspectral response curve may be, for example, shown in (d) in FIG. 10.

It may be learned that, compared with a three-channel spectral device that senses a three-channel spectrum, the high-resolution multispectral component has a superior spectral sensing capability, and colors of a multispectral image captured by the high-resolution multispectral component more closely match true colors.

Details are as follows:
(1) Due to a limitation in material capability, a spectral sensitivity curve corresponding to a three-channel camera differs significantly from a spectral sensitivity curve corresponding to a human eye. Consequently, a captured image exhibits a weak color reproduction capability and is prone to color casts in some colors. For example, when an image of true red-orange, cyan-green, or blue-violet is captured, a corresponding color in an output image deviates from red-orange, cyan-green, or blue-violet.

A multispectral sensitivity curve and a hyperspectral sensitivity curve that correspond to a high-resolution multispectral camera differ slightly from the spectral sensitivity curve corresponding to the human eye, and a captured image has a strong color reproduction capability. Therefore, a problem of color casts basically does not occur.

In this embodiment of this application, the high-resolution multispectral camera may perform dimensionality reduction on a corresponding spectral sensitivity function, that is, perform spectral band downsampling based on a sensed multispectral band, to obtain a three-channel image with superior color authenticity.

The spectral sensitivity curve may also be described as a spectral response curve.

(2) The human eye and brain have color adaptation capabilities, which are mainly related to a color of an ambient light source. However, it is difficult to accurately estimate the color of the light source based on three-channel color information collected by the three-channel (for example, RGB/RYB) camera. Consequently, an output image is prone to inaccurate white balance, resulting in a color cast across the entire image. The high-resolution multispectral camera has more channels, so that spatial color information corresponding to a raw image captured by the high-resolution multispectral camera is greatly increased, and colors of an output image more closely match true colors of a captured object. Correspondingly, a white balance capability is significantly enhanced, and a problem of color casts of an image can be resolved to a large extent. White balance refers to a reference color used to determine colors of an image. When the white balance is inaccurate (that is, the reference color is inaccurate), a color cast across the entire image is naturally caused.

(3) The spectral sensitivity function of the high-resolution multispectral camera may be degraded into a spectral sensitivity function corresponding to the human eye, a spectral sensitivity function corresponding to the RGB camera, or a spectral sensitivity function corresponding to the RYB camera via dimensionality reduction (which may also be understood as: the spectral sensitivity function corresponding to the high-resolution multispectral camera is fitted to each of the spectral sensitivity function corresponding to the human eye, the spectral sensitivity function corresponding to the RGB camera, and the spectral sensitivity function corresponding to the RYB camera). In other words, a multi-channel image captured by the high-resolution multispectral camera may be converted into a three-channel image. Due to high authenticity of the multi-channel image captured by the high-resolution multispectral camera, the three-channel image converted from the multi-channel image also exhibits higher authenticity compared with the three-channel image captured by the three-channel camera. The dimensionality reduction and fitting of spectral bands from high dimensions to low dimensions is very precise. Because the high-resolution multispectral camera can perform the dimensionality reduction of the spectral bands, that is, the high-resolution multispectral camera can simultaneously capture a color image perceived by a human eye, a color image sensed by an ultra-wide-angle camera, a color image sensed by a wide-angle (primary) camera, and a color image sensed by a long-focus camera. In addition, there is no difference between the captured color images in terms of FOV, brightness, contrast, dynamic range, overexposure, and the like. This can also implement better color consistency and higher authenticity of images captured by a plurality of cameras in a camera array.

Therefore, a color sensed by the high-resolution multispectral camera is accurate, and raw image (raw image) distributions that are of an ultra-wide-angle camera, a wide-angle (primary) camera, and a long-focus camera and that are derived from a same information source may be simulated via spectral band dimensionality reduction (that is, the sensed multi-optical channel image is converted into a three-channel image via spectral band dimensionality reduction). There is no FOV difference between the plurality of simulated raw image distributions, and there is no problem of inaccurate white balance. Therefore, the high-resolution multispectral camera may serve as a global color observer, and different types of cameras (including the ultra-wide-angle camera, the wide-angle (primary) camera, and the long-focus camera, along with modules from primary suppliers, secondary suppliers, and the like) are calibrated to match colors sensed by the high-resolution multispectral camera, so that color performance with high consistency and high authenticity is achieved.

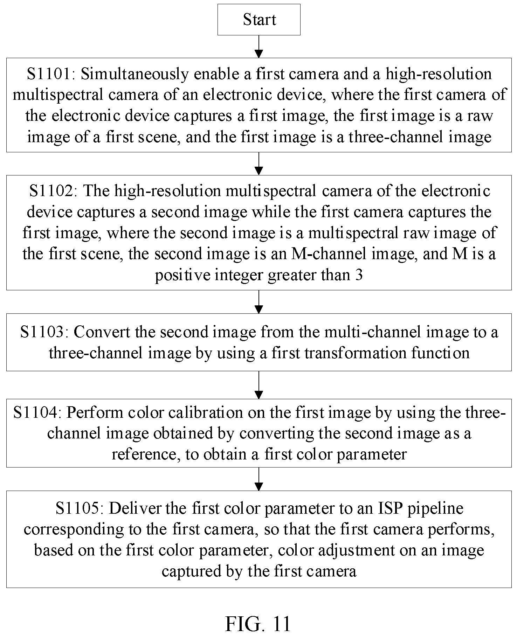

For example, FIG. 11 is a schematic flowchart of a method 1100 for camera color calibration according to an embodiment of this application. As shown in FIG. 11, the method 1100 includes the following steps.

S1101: Simultaneously enable a first camera and a high-resolution multispectral camera of an electronic device, where the first camera of the electronic device captures a first image, and the first image is a raw image of a first scene.

The first image is a three-channel image, for example, may be an RGB image, or may be an RYB image.

The first camera of the electronic device may include one or more of a wide-angle camera, an ultra-wide-angle camera, and a long-focus camera.

S1102: The high-resolution multispectral camera of the electronic device captures a second image while the first camera captures the first image, where the second image is a multispectral raw image of the first scene.

The second image is an M-channel image, and M is a positive integer greater than 3.

It may also be understood as follows: The first image captured by the first camera corresponds to spectral information of three frequency bands, the second image captured by the high-resolution multispectral camera corresponds to spectral information of M frequency bands, and spatial color information of the second image is far more abundant than spatial color information of the first image. In other words, spectral information sensed by the high-resolution multispectral camera is more abundant than spectral information sensed by the first camera, and thus more closely matches true colors of the first scene.

S1103: Convert the second image from the multi-channel image to a three-channel image by using a first transformation function, where the first transformation function is a transformation function between the high-resolution multispectral camera and the first camera, and is used to represent a spectral band mapping relationship between the high-resolution multispectral camera and the first camera.

In a specific embodiment, spectral band downsampling is performed on the second image based on the first transformation function, to convert the second image from the multi-channel image to the three-channel image.

The first transformation function is a function that performs matrix multiplication between the second image and a downsampling matrix.

In some embodiments, an estimation method for the downsampling matrix used by the first transformation function may be any one of a Bayesian method, a least square method, or a deep learning method, or may be another estimation method.

Downsampling is also referred to as sampling rate reduction or decimation, and is one of fundamental concepts in digital signal processing. It means that a sample value sequence is sampled once at an interval of several sample values, and a new sequence obtained in this way is downsampling of the original sequence. In image processing, a main objective of downsampling is to reduce an image size to match a size of a display area or generate a thumbnail of a corresponding image. For an image in a matrix form, downsampling transforms an image within an s×s window of the raw image into a pixel, and a value of the pixel is an average value or a maximum value of all pixels in the window.

In image processing, a principle of downsampling is as follows: s-fold downsampling is performed on an image I with a size of M×N, and an image with a resolution of (M/s)×(N/s) is obtained, where s should be a common divisor of M and N.

S1104: Perform color calibration on the first image by using the three-channel image obtained by converting the second image as a reference, to obtain a first color parameter.

S1105: Deliver the first color parameter to an ISP pipeline corresponding to the first camera, so that the first camera performs, based on the first color parameter, color adjustment on an image captured by the first camera.

In some embodiments, the electronic device further includes a second camera. The second camera is a three-channel camera, and color calibration may be performed on the second camera based on the high-resolution multispectral camera. A color calibration process of the second camera is the same as the foregoing color calibration process of the first camera.

In this embodiment of this application, a method for array camera color calibration based on a high-resolution multispectral camera is provided. In this method, because an image captured by the high-resolution multispectral camera is a multi-channel image, spatial color information of the image is more abundant, and corresponding color authenticity of the image is higher. The image captured by the high-resolution multispectral camera is used as a color reference, to separately calibrate colors of images captured by cameras in a camera array, so that color authenticity and consistency of images captured by a plurality of cameras in the camera array can be improved. In addition, because a size of the high-resolution multispectral camera is small, power consumption generated in a calibration process is low, and architecture redundancy and calibration costs of the electronic device in a color management development process can be reduced. In this method, a unified reference line is provided for each camera, thereby improving debugging efficiency.

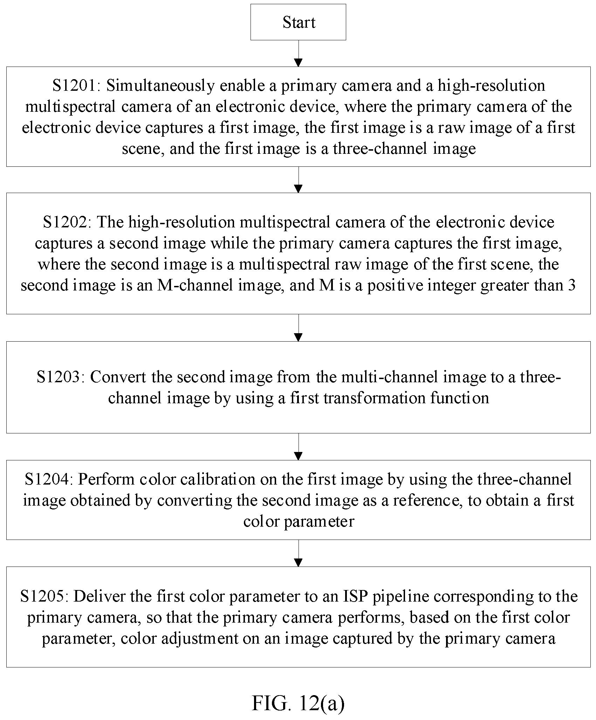

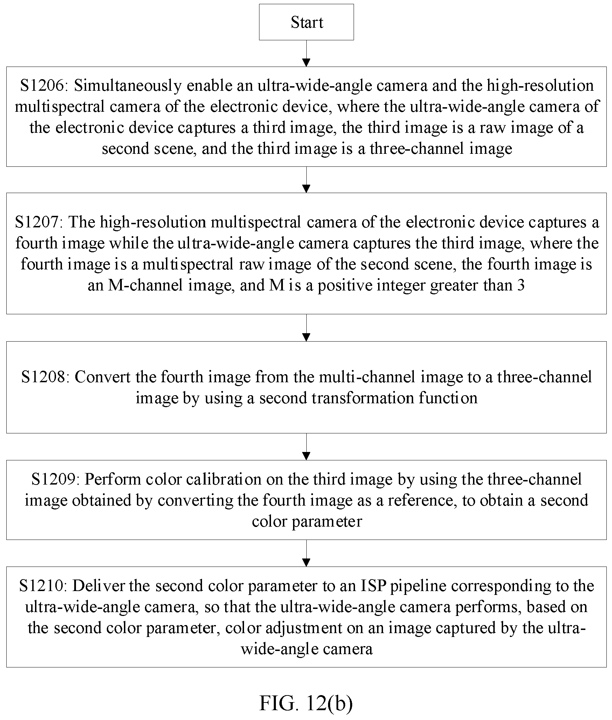

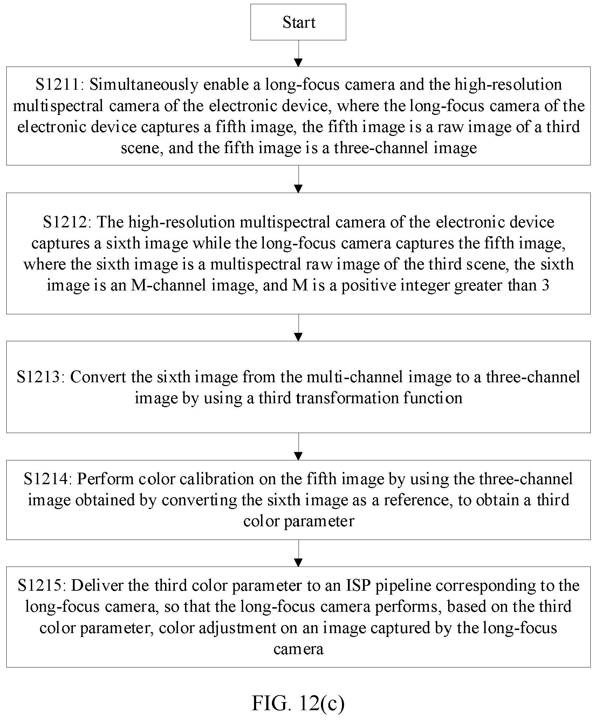

For example, FIG. 12(a), FIG. 12(b), and FIG. 12(c) are a schematic flowchart of another method 1200 for camera color calibration according to an embodiment of this application. As shown in FIG. 12(a), FIG. 12(b), and FIG. 12(c), an electronic device includes a camera array. The camera array includes a primary camera, an ultra-wide-angle camera, and a long-focus camera. The method 1200 includes the following steps.

S1201 to S1205 are a process of performing color calibration on the primary camera of the electronic device by using a high-resolution multispectral camera as a reference.

S1201: Simultaneously enable the primary camera and the high-resolution multispectral camera of the electronic device, where the primary camera of the electronic device captures a first image, and the first image is a raw image of a first scene.

The first image is a three-channel image, for example, may be an RGB image, or may be an RYB image.

S1202: The high-resolution multispectral camera of the electronic device captures a second image while the primary camera captures the first image, where the second image is a multispectral raw image of the first scene.

The second image is an M-channel image, and M is a positive integer greater than 3.

It may also be understood as follows: The first image captured by the primary camera is a three-channel image, the second image captured by the high-resolution multispectral camera is a multi-channel image, and spatial color information of the second image is far more abundant than spatial color information of the first image. In other words, spectral information sensed by the high-resolution multispectral camera is more abundant than spectral information sensed by the primary camera, and thus more closely matches true colors of the first scene.

S1203: Convert the second image from the multi-channel image to a three-channel image by using a first transformation function, where the first transformation function is a transformation function between the high-resolution multispectral camera and the primary camera, and is used to represent a spectral band mapping relationship between the high-resolution multispectral camera and the primary camera.

In a specific embodiment, spectral band downsampling is performed on the second image based on the first transformation function, to convert the second image from the multi-channel image to the three-channel image.

In an implementation, downsampling is performed, based on the first transformation function, from M (or k×k) channels corresponding to the second image to three channels, to convert the second image from the multi-channel image to the three-channel image, where the first transformation function may be a function that performs matrix multiplication between the second image and a downsampling matrix with a size of M×3 (or k²×3).

S1204: Perform color calibration on the first image by using the three-channel image obtained by converting the second image as a reference, to obtain a first color parameter.

In some embodiments, the first color parameter may include any one or more of an auto white balance (auto white balance, AWB) parameter, a color adjustment (color adjustment, CA) parameter, a color calibration (color calibration, CC) parameter, and a 3D lookup table (3D lookup table, 3DLUT). In addition, the first color parameter may alternatively be another color-related parameter. This is not limited in this application.

S1205: Deliver the first color parameter to an ISP pipeline corresponding to the primary camera, so that the primary camera performs, based on the first color parameter, color adjustment on an image captured by the primary camera.

In some embodiments, S1201 to S1204 are an offline calibration process. After the first color parameter corresponding to the primary camera is obtained through the offline calibration process, when the primary camera captures an image and processes the captured image by using an ISP corresponding to the primary camera, color adjustment may be performed on the captured image based on the first color parameter, so that authenticity of the image output by the primary camera is higher.

In some other embodiments, S1201 to S1204 are an online calibration process. When a user captures an image by using the primary camera, the high-resolution multispectral camera is synchronously enabled when the primary camera is enabled, and the high-resolution multispectral camera captures an image of a same scene when the primary camera captures an image. The first color parameter is obtained through S1201 to S1204, and when the captured image is processed by using the ISP corresponding to the primary camera, color adjustment is performed on the captured image based on the first color parameter, so that authenticity of the image output by the primary camera is higher.

In some embodiments, the color standard process of the primary camera may occur during every process of capturing an image by using the primary camera, or may occur in response to a calibration operation of the user, or may be performed offline (or online) once after a specific quantity of images are shot, or may be performed once at a specific interval. Alternatively, another calibration occasion may be used. In this application, an occurrence occasion of color calibration for the camera is not limited, and a calibration scenario is not limited either. The calibration may be offline calibration or online calibration.

In this embodiment of this application, because a quantity of color channels included in the second image is M, and included spectral information is more abundant than spectral information corresponding to the first image, the three-channel image obtained by mapping the second image to color space of an image obtainable by the primary camera is closer to true colors of the first scene. In this way, color adjustment can be performed on the first image by using the image obtained after downsampling is performed on the channels of the second image, thereby improving color accuracy and consistency of the image shot by the primary camera.

S1206 to S1210 are a process of performing color calibration on the ultra-wide-angle camera of the electronic device by using the high-resolution multispectral camera as a reference.

S1206: Simultaneously enable the ultra-wide-angle camera and the high-resolution multispectral camera of the electronic device, where the ultra-wide-angle camera of the electronic device captures a third image, and the third image is a raw image of a second scene.

The third image is a three-channel image, for example, may be an RGB image, or may be an RYB image.

S1207: The high-resolution multispectral camera of the electronic device captures a fourth image while the ultra-wide-angle camera captures the third image, where the fourth image is a multispectral raw image of the second scene.

The fourth image is an M-channel image, and M is a positive integer greater than 3.

It may also be understood as follows: The third image captured by the ultra-wide-angle camera is a three-channel image, the fourth image captured by the high-resolution multispectral camera is a multi-channel image, and spatial color information of the fourth image is far more abundant than spatial color information of the third image. In other words, spectral information sensed by the high-resolution multispectral camera is more abundant than spectral information sensed by the ultra-wide-angle camera, and thus more closely matches true colors of the second scene.

S1208: Convert the fourth image from the multi-channel image to a three-channel image by using a second transformation function, where the second transformation function is a transformation function between the high-resolution multispectral camera and the ultra-wide-angle camera, and is used to represent a spectral band mapping relationship between the high-resolution multispectral camera and the ultra-wide-angle camera.

In a specific embodiment, spectral band downsampling is performed on the fourth image based on the second transformation function, to convert the fourth image from the multi-channel image to the three-channel image.

In some embodiments, an estimation method for a downsampling matrix used by the second transformation function may be any one of a Bayesian method, a least square method, or a deep learning method, or may be another estimation method.

In an implementation, downsampling is performed, based on the second transformation function, from M (or k×k) channels corresponding to the fourth image to three channels, to convert the fourth image from the multi-channel image to the three-channel image, where the second transformation function may be a function that performs matrix multiplication between the fourth image and the downsampling matrix with a size of M×3 (or k²×3).

S1209: Perform color calibration on the third image by using the three-channel image obtained by converting the fourth image as a reference, to obtain a second color parameter.

An explanation of the second color parameter is the same as the foregoing explanation of the first color parameter. For brevity, details are not described herein again.

S1210: Deliver the second color parameter to an ISP pipeline corresponding to the ultra-wide-angle camera, so that the ultra-wide-angle camera performs, based on the second color parameter, color adjustment on an image captured by the ultra-wide-angle camera.

In some embodiments, the second scene is the same as the first scene, and the fourth image and the second image are a same image. In other words, in some implementations, when the ultra-wide-angle camera and the primary camera both capture (either synchronously or in a non-synchronized manner within a time threshold) the raw image of the first scene, S1207 may not be performed. The high-resolution multispectral camera needs to synchronously capture the multispectral raw image of the first scene only once, and color calibration for the ultra-wide-angle camera and the primary camera is implemented by using the multispectral raw image of the first scene.

In some embodiments, S1206 to S1209 are an offline calibration process. After the second color parameter corresponding to the ultra-wide-angle camera is obtained through the offline calibration process, when the ultra-wide-angle camera captures an image and processes the captured image by using an ISP corresponding to the ultra-wide-angle camera, color adjustment may be performed on the captured image based on the second color parameter, so that authenticity of the image output by the ultra-wide-angle camera is higher.

In some other embodiments, S1206 to S1209 are an online calibration process. When the user captures an image by using the ultra-wide-angle camera, the high-resolution multispectral camera is synchronously enabled when the ultra-wide-angle camera is enabled, and the high-resolution multispectral camera captures an image of a same scene when the ultra-wide-angle camera captures an image. The second color parameter is obtained through S1206 to S1209, and when the captured image is processed by using the ISP corresponding to the ultra-wide-angle camera, color adjustment is performed on the captured image based on the second color parameter, so that authenticity of the image output by the ultra-wide-angle camera is higher.

In some embodiments, the color standard process of the ultra-wide-angle camera may occur during every process of capturing an image by using the ultra-wide-angle camera, or may occur in response to a calibration operation of the user, or may be performed offline (or online) once after a specific quantity of images are shot, or may be performed once at a specific interval. Alternatively, another calibration occasion may be used. In this application, an occurrence occasion of color calibration for the camera is not limited, and a calibration scenario is not limited either. The calibration may be offline calibration or online calibration.

In this embodiment of this application, because a quantity of color channels included in the fourth image is M, and included spectral information is more abundant than spectral information corresponding to the third image, the three-channel image obtained by mapping the fourth image to color space of an image obtainable by the ultra-wide-angle camera is closer to true colors of the second scene. In this way, color adjustment can be performed on the third image by using the image obtained after downsampling is performed on the channels of the fourth image, thereby improving color accuracy and consistency of the image shot by the ultra-wide-angle camera.

S1211 to S1215 are a process of performing color calibration on the long-focus camera of the electronic device by using the high-resolution multispectral camera as a reference.

S1211: Simultaneously enable the long-focus camera and the high-resolution multispectral camera of the electronic device, where the long-focus camera of the electronic device captures a fifth image, and the fifth image is a raw image of a third scene.

The fifth image is a three-channel image, for example, may be an RGB image, or may be an RYB image.

S1212: The high-resolution multispectral camera of the electronic device captures a sixth image while the long-focus camera captures the fifth image, where the sixth image is a multispectral raw image of the third scene.

The sixth image is an M-channel image, and M is a positive integer greater than 3.

It may also be understood as follows: The fifth image captured by the long-focus camera is a three-channel image, the sixth image captured by the high-resolution multispectral camera is a multi-channel image, and spatial color information of the sixth image is far more abundant than spatial color information of the fifth image. In other words, spectral information sensed by the high-resolution multispectral camera is more abundant than spectral information sensed by the long-focus camera, and thus more closely match true colors of the third scene.

S1213: Convert the sixth image from the multi-channel image to a three-channel image by using a third transformation function, where the third transformation function is a transformation function between the high-resolution multispectral camera and the long-focus camera, and is used to represent a spectral band mapping relationship between the high-resolution multispectral camera and the long-focus camera.

In a specific embodiment, spectral band downsampling is performed on the sixth image based on the third transformation function, to convert the sixth image from the multi-channel image to the three-channel image.

In some embodiments, an estimation method for a downsampling matrix used by the third transformation function may be any one of a Bayesian method, a least square method, or a deep learning method, or may be another estimation method.

In some embodiments, the first/second/third transformation function may be understood as a first/second/third mapping parameter.

In an implementation, downsampling is performed, based on the third transformation function, from M (or k×k) channels corresponding to the sixth image to three channels, to convert the sixth image from the multi-channel image to the three-channel image, where the third transformation function may be a function that performs matrix multiplication between the sixth image and the downsampling matrix with a size of M×3 (or k²×3).

S1214: Perform color calibration on the fifth image by using the three-channel image obtained by converting the sixth image as a reference, to obtain a third color parameter.

An explanation of the third color parameter is the same as the foregoing explanation of the first color parameter. For brevity, details are not described herein again.

S1215: Deliver the third color parameter to an ISP pipeline corresponding to the long-focus camera, so that the long-focus camera performs, based on the third color parameter, color adjustment on an image captured by the long-focus camera.

In some embodiments, the third scene is the same as the first scene, and the sixth image and the second image are a same image. In other words, in some implementations, when the long-focus camera and the primary camera both capture (either synchronously or in a non-synchronized manner within a time threshold) the raw image of the first scene, S1212 may not be performed. The high-resolution multispectral camera needs to synchronously capture the multispectral raw image of the first scene only once, and color calibration for the long-focus camera and the primary camera is implemented by using the multispectral raw image of the first scene.

In some other embodiments, the third scene is the same as the second scene, and the sixth image and the fourth image are a same image. In other words, in some implementations, when the long-focus camera and the ultra-wide-angle camera both capture (either synchronously or in a non-synchronized manner within a time threshold) the raw image of the second scene, S1212 may not be performed. The high-resolution multispectral camera needs to synchronously capture the multispectral raw image of the second scene only once, and color calibration for the long-focus camera and the ultra-wide-angle camera is implemented by using the multispectral raw image of the second scene.

In some other embodiments, the third scene, the second scene, and the first scene are all the same, and the sixth image, the fourth image, and the second image are all a same image. In other words, in some implementations, when the ultra-wide-angle camera, the long-focus camera, and the primary camera all capture (either synchronously or in a non-synchronized manner within a time threshold) the raw image of the first scene, S1207 and S1212 may not be performed. The high-resolution multispectral camera needs to synchronously capture the multispectral raw image of the first scene only once, color calibration for the long-focus camera, the ultra-wide-angle camera, and the primary camera is implemented by using the multispectral raw image of the first scene.

In some embodiments, S1211 to S1214 are an offline calibration process. After the third color parameter corresponding to the long-focus camera is obtained through the offline calibration process, when the long-focus camera captures an image and processes the captured image by using an ISP corresponding to the long-focus camera, color adjustment may be performed on the captured image based on the third color parameter, so that authenticity of the image output by the long-focus camera is higher.

In some other embodiments, S1211 to S1214 are an online calibration process. When the user captures an image by using the long-focus camera, the high-resolution multispectral camera is synchronously enabled when the long-focus camera is enabled, and the high-resolution multispectral camera captures an image of a same scene when the long-focus camera captures an image. The third color parameter is obtained through S1211 to S1214, and when captured image is processed by using the ISP corresponding to the long-focus camera, color adjustment is performed on the captured image based on the third color parameter, so that authenticity of the image output by the long-focus camera is higher.

In some embodiments, the color standard process of the long-focus camera may occur during every process of capturing an image by using the long-focus camera, or may occur in response to a calibration operation of the user, or may be performed offline (or online) once after a specific quantity of images are shot, or may be performed once at a specific interval. Alternatively, another calibration occasion may be used. In this application, an occurrence occasion of color calibration for the camera is not limited, and a calibration scenario is not limited either. The calibration may be offline calibration or online calibration.

Parameter types of the first color parameter, the second color parameter, and the third color parameter should be consistent. That is, a color-related module in the ISP pipeline of the primary camera, a color-related module in the ISP pipeline of the ultra-wide-angle camera, and a color-related module in the ISP pipeline of the long-focus camera are the same.

In this embodiment of this application, because an image captured by the high-resolution multispectral camera is a multi-channel image, spatial color information of the image is more abundant, and corresponding color authenticity of the image is higher. The image captured by the high-resolution multispectral camera is used as a color reference, to separately calibrate colors of images shot by cameras in a camera array, so that the colors of the images captured by the cameras are calibrated to match colors sensed by the high-resolution multispectral camera, and color authenticity and consistency of the images shot by the plurality of cameras in the camera array can be improved.

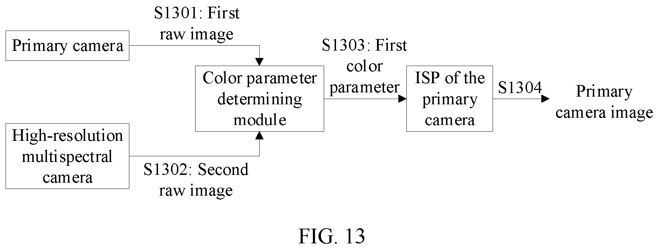

For example, FIG. 13 is a diagram of a system framework corresponding to a method for camera color calibration according to an embodiment of this application.

As shown in FIG. 13, an electronic device includes a primary camera, a high-resolution multispectral camera, a color parameter determining module, and an image signal processor (ISP). The system framework is configured to perform the following steps.

S1301: Simultaneously enable the primary camera and the high-resolution multispectral camera of the electronic device, where the primary camera captures a first raw image, and the first raw image is a raw image of a first scene.

The first raw image is a three-channel image, for example, may be an RGB image, or may be an RYB image.

S1302: The high-resolution multispectral camera captures a second raw image while the primary camera captures the first raw image, where the second raw image is a raw image of the first scene.

The second raw image is an M-channel image, and M is a positive integer greater than 3.

S1303: The color parameter determining module determines a first color parameter based on the first raw image and the second raw image, and delivers the first color parameter to an ISP pipeline corresponding to the primary camera.

Specifically, the color parameter determining module converts the second raw image from the M-channel image to a three-channel image by using a first transformation function, where the first transformation function is a transformation function between the high-resolution multispectral camera and the primary camera, and is used to represent a spectral band mapping relationship between the high-resolution multispectral camera and the primary camera; and then performs color calibration on the first raw image by using the three-channel image obtained by converting the second raw image as a reference, to obtain the first color parameter.

An explanation of the first color parameter is described in detail in the embodiment shown in FIG. 11. For brevity, details are not described herein again.

S1304: The primary camera performs, based on the first color parameter, color adjustment on an image captured by the primary camera.

In some embodiments, color calibration performed by the high-resolution multispectral camera on the primary camera is online calibration. In a process of processing the first raw image through the ISP pipeline corresponding to the primary camera, color adjustment is performed on the first raw image based on the first color parameter, and a color-adjusted image, namely, a primary camera image, is output.

In some other embodiments, color calibration performed by the high-resolution multispectral camera on the primary camera is offline calibration. After the first color parameter is obtained, when an image is captured by using the primary camera, in a process of processing the captured image through the ISP pipeline corresponding to the primary camera, color adjustment is performed on the captured image based on the first color parameter, and a color-adjusted image, namely, a primary camera image, is output.

Further, the electronic device includes an ultra-wide-angle camera. Color calibration may be performed on the ultra-wide-angle camera of the electronic device by using the high-resolution multispectral camera as a reference. A diagram of a system architecture corresponding to the color calibration process is similar to the foregoing diagram of the system architecture in which color calibration is performed on the primary camera of the electronic device by using the high-resolution multispectral camera as a reference. For brevity, details are not described herein again.

Further, the electronic device includes a long-focus camera. Color calibration may be performed on the long-focus camera of the electronic device by using the high-resolution multispectral camera as a reference. A diagram of a system architecture corresponding to the color calibration process is similar to the foregoing diagram of the system architecture in which color calibration is performed on the primary camera of the electronic device by using the high-resolution multispectral camera as a reference. For brevity, details are not described herein again. In this embodiment of this application, an image shot by the high-resolution multispectral camera is used as a color reference, to separately calibrate colors of images shot by cameras in a camera array, so that the colors of the images captured by the cameras are calibrated to match colors sensed by the high-resolution multispectral camera, and color authenticity and consistency of the images shot by the plurality of cameras can be improved.

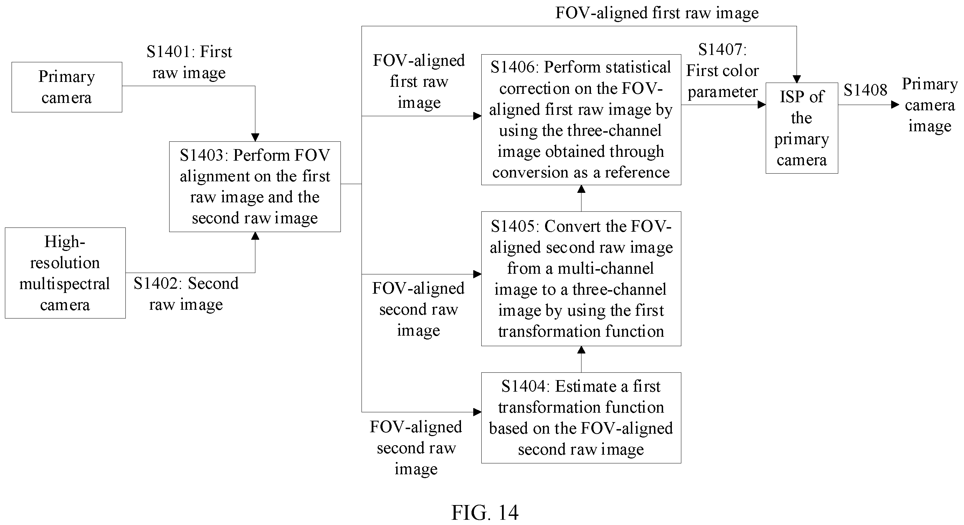

For example, FIG. 14 is a schematic flowchart corresponding to another method 1400 for camera color calibration according to an embodiment of this application. As shown in FIG. 14, the method 1400 includes the following steps.

S1401 and S1402 are the same as S1301 and S1302 in the embodiment shown in FIG. 13. For brevity, details are not described herein again.

S1403: Perform field of view (FOV) alignment on the first raw image and the second raw image.

In an implementation, FOV cropping and alignment are performed on the first raw image and the second raw image in a calibration manner.

S1404: Estimate a first transformation function based on the FOV-aligned second raw image, where the first transformation function may also be understood as a spectral band mapping parameter between the high-resolution multispectral camera and the primary camera.

In some embodiments, the first transformation function is a downsampling matrix used for downsampling from the FOV-aligned second raw image to the FOV-aligned first raw image.

A method for estimating the downsampling matrix used by the first transformation function is described in detail in the foregoing embodiment. For brevity, details are not described herein again.

1405: Convert the FOV-aligned second raw image from the multi-channel image to a three-channel image by using the first transformation function.

It should be understood that, compared with the three-channel image captured by the primary camera, the three-channel image obtained by converting the second raw image has higher color authenticity.

In an implementation, M=k×k, and spectral band downsampling is performed, based on the first transformation function, from k×k channels corresponding to the second raw image to three channels, to convert the second raw image from the multi-channel image to the three-channel image, where the first transformation function is a function that performs matrix multiplication between the second image and a downsampling matrix with a size of k²×3, and a value of k is a positive integer greater than or equal to 3.

S1406: Perform statistical correction on the FOV-aligned first raw image by using the three-channel image obtained by converting the FOV-aligned second RAW image as a reference, to obtain a first color parameter corresponding to the primary camera.

An explanation of the first color parameter is described in detail in the embodiment shown in FIG. 11. For brevity, details are not described herein again.

In some embodiments, statistical correction is performed on the aligned first raw image, and a used statistical correction method may include white point correction and the like.

S1407: Deliver the first color parameter to an ISP pipeline corresponding to the primary camera.

S1408: In an ISP of the first camera, perform color adjustment on the FOV-aligned first raw image based on the first color parameter, and output a color-adjusted image, namely, a primary camera image.

In some embodiments, in the ISP of the first camera, after the first color parameter is obtained, the primary camera performs, based on the first color parameter, color adjustment on an image captured by the primary camera.

Further, the electronic device includes an ultra-wide-angle camera. Color calibration may be performed on the ultra-wide-angle camera of the electronic device by using the high-resolution multispectral camera as a reference. The color calibration process may be similar to the foregoing process (S1401 to S1408) of performing color calibration on the primary camera of the electronic device by using the high-resolution multispectral camera as a reference. For brevity, details are not described herein again.

Further, the electronic device includes a long-focus camera. Color calibration may be performed on the long-focus camera of the electronic device by using the high-resolution multispectral camera as a reference. The color calibration process is similar to the foregoing process (S1401 to S1408) of performing color calibration on the primary camera of the electronic device by using the high-resolution multispectral camera as a reference. For brevity, details are not described herein again.

In this embodiment of this application, a mapping relationship between a high-spectral band resolution image obtained by the high-resolution multispectral camera and a low-spectral band resolution (RGB three-channel) image of each array camera may be separately constructed. Downsampling is performed from the high-spectral band resolution image to the low-spectral band resolution image based on the mapping relationship, to obtain a three-channel image with higher color authenticity corresponding to the low-spectral band resolution image. The low-spectral band resolution image is calibrated by using the three-channel image with higher color authenticity, a color parameter corresponding to each array camera can be obtained, and then each array camera performs color adjustment on a shot image based on the corresponding color parameter, so that colors of the images captured by the cameras are calibrated to match colors sensed by the high-resolution multispectral camera, and color authenticity and consistency of images shot by a plurality of cameras in a camera array can be improved.

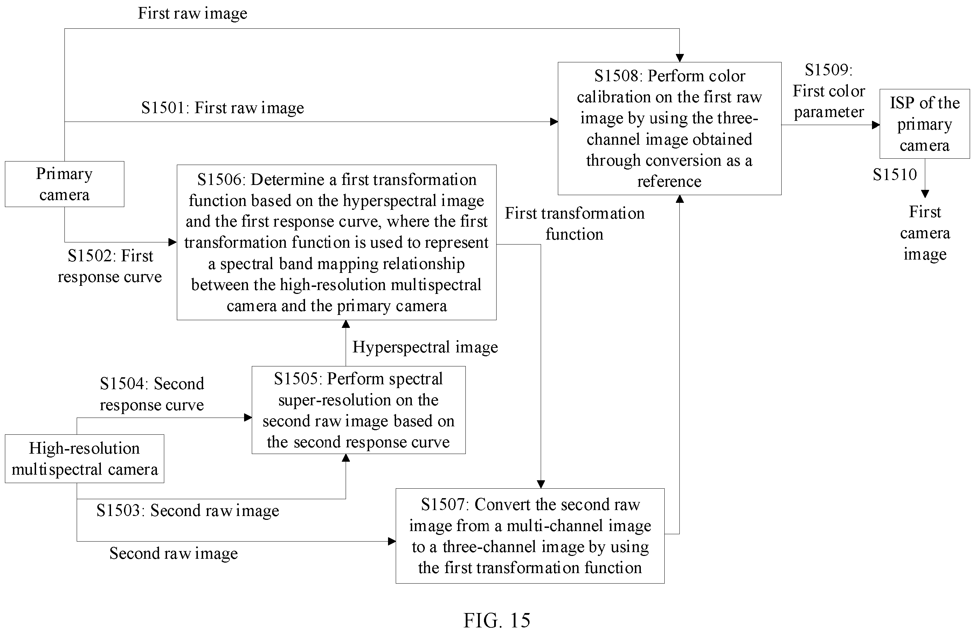

For example, FIG. 15 is a schematic flowchart corresponding to another method 1500 for camera color calibration according to an embodiment of this application. As shown in FIG. 15, the method 1500 includes the following steps.

S1501: Simultaneously enable a primary camera and a high-resolution multispectral camera, where the primary camera captures a first raw image, and the first raw image is a raw image of a first scene.

An explanation of this step is the same as the explanation of step S1301 in the embodiment shown in FIG. 13. For brevity, details are not described herein again.

S1502: Generate a first response curve corresponding to the first raw image.

The first response curve may be understood as a spectral sensitivity curve corresponding to the first raw image. For details, refer to the embodiment shown in FIG. 10.

S1503: The high-resolution multispectral camera captures a second raw image while the primary camera captures the first raw image, where the second raw image is a raw image of the first scene.

An explanation of this step is the same as the explanation of step S1302 in the embodiment shown in FIG. 13. For brevity, details are not described herein again.

S1504: Generate a second response curve corresponding to the second raw image.

The second response curve may be understood as a spectral sensitivity curve corresponding to the second raw image. For details, refer to the embodiment shown in FIG. 10.

S1505: Perform spectral super-resolution on the second raw image based on the second response curve, to obtain a hyperspectral image corresponding to the second raw image.

It should be understood that a quantity of spectral bands corresponding to the hyperspectral image corresponding to the second raw image is far greater than a quantity of spectral bands corresponding to the second raw image.

In some embodiments, the second raw image corresponds to M spectral bands, and the hyperspectral image corresponding to the second raw image corresponds to N spectral bands, where N is far greater than M, and when a value of M is k², N≫k².

In some embodiments, a method for performing spectral super-resolution on the second raw image includes a compressive sensing-based super-resolution reconstruction method and/or a neural network-based spectral super-resolution method. In addition, another spectral super-resolution method may be used. This is not limited in this application.

S1506: Determine a first transformation function based on the hyperspectral image corresponding to the second raw image and the first response curve, where the first transformation function may also be understood as a spectral band mapping parameter between the high-resolution multispectral camera and the primary camera.

In some embodiments, the first transformation function is a function that performs matrix multiplication between the second image and a downsampling matrix that downsamples the hyperspectral image corresponding to the second raw image to the first raw image.

S1507: Convert the second raw image into a three-channel image by using the first transformation function.

It should be understood that, compared with the three-channel image captured by the primary camera, the three-channel image obtained by converting the second raw image has higher color authenticity.

In an implementation, spectral band downsampling is performed, based on a downsampling matrix with a size of N×3, from N channels corresponding to the hyperspectral image corresponding to the second raw image to three channels, to convert the hyperspectral image corresponding to the second raw image to the three-channel image, so that the second raw image is converted from the multi-channel image to the three-channel image, where N is far greater than M.

S1508: Perform statistical correction on the first raw image by using the three-channel image obtained through conversion as a reference, to obtain a first color parameter corresponding to the primary camera.

An explanation of the first color parameter is described in detail in the embodiment shown in FIG. 11. For brevity, details are not described herein again.

S1509: Deliver the first color parameter to an ISP pipeline corresponding to the primary camera.

S1510: In an ISP of the first camera, perform color adjustment on the first raw image based on the first color parameter, and output a color-adjusted image, namely, a primary camera image.

In some embodiments, in the ISP of the primary camera, after the first color parameter is obtained, the primary camera performs, based on the first color parameter, color adjustment on an image captured by the primary camera.

Further, the electronic device includes an ultra-wide-angle camera. Color calibration may be performed on the ultra-wide-angle camera of the electronic device by using the high-resolution multispectral camera as a reference. The color calibration process may be similar to the foregoing process (S1501 to S1510) of performing color calibration on the primary camera of the electronic device by using the high-resolution multispectral camera as a reference. For brevity, details are not described herein again.

Further, the electronic device includes a long-focus camera. Color calibration may be performed on the long-focus camera of the electronic device by using the high-resolution multispectral camera as a reference. The color calibration process is similar to the foregoing process (S1501 to S1510) of performing color calibration on the primary camera of the electronic device by using the high-resolution multispectral camera as a reference. For brevity, details are not described herein again.

In an implementation, the primary camera performs online color calibration during first shooting to obtain a first color parameter, and performs, based on the first color parameter, color adjustment on an image obtained from the first shooting. Then, when shooting an image again, the primary camera directly performs color adjustment on the shot image based on the first color parameter.

In another implementation, the primary camera obtains a first color parameter through online calibration or offline calibration in a first time period, and performs, based on the first color parameter, color adjustment on all images shot in the first time period; and the primary camera obtains a second color parameter through online calibration or offline calibration in a second time period, and performs, based on the second color parameter, color adjustment on all images shot in the second time period.

In still another implementation, the primary camera obtains a first color parameter in advance through offline calibration, and when shooting an image, the primary camera performs color adjustment on the shot image based on the first color parameter.

It should be understood that, in terms of sensor function implementation, the multispectral camera (or the high-resolution multispectral camera, or the second camera) in embodiments of this application may be a color filter array (color filter array, CFA) that achieves differentiation through the use of a chemical dye, or may be a CFA that achieves differentiation through coating interference, or may be a CFA that achieves differentiation through a metasurface wiener structure, or may be another sensor function implementation. This is not limited in this application.

It should be further understood that, in terms of module function implementation, the multispectral camera (or the high-resolution multispectral camera, or the second camera) in embodiments of this application may be independent of an existing camera (for example, a wide-angle camera, an ultra-wide-angle camera, or a long-focus camera) of the electronic device, or may form a structure appearance with an existing camera, for example, a hybrid (hybrid) structure appearance, or may be another module function implementation. This is not limited in this application.

The color parameter may include one or more parameters corresponding to a color module in the ISP pipeline of the camera, and may further include one or more parameters corresponding to a brightness module in the ISP pipeline of the camera.

One or more of the modules or units described in this specification may be implemented by software, hardware, or a combination of software and hardware. When any one of the foregoing modules or units is implemented by software, the software exists in a form of computer program instruction, and is stored in a memory. A processor may be configured to: execute the program instruction and implement the foregoing method procedure. The processor may include but is not limited to at least one of the following computing devices that run various types of software: a central processing unit (central processing unit, CPU), a microprocessor, a digital signal processor (DSP), a microcontroller unit (microcontroller unit, MCU), an artificial intelligence processor, or the like. Each computing device may include one or more cores configured to execute software instructions to perform an operation or processing. The processor may be built in a SoC (system-on-a-chip) or an application-specific integrated circuit (application-specific integrated circuit, ASIC), or may be an independent semiconductor chip. In addition to the core configured to perform an operation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units described in this specification are implemented by hardware, the hardware may be any one or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedure.

When the modules or units described in this specification are implemented by software, all or some of the modules or units may be implemented in a form of computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for camera color calibration, wherein the method is applied to an electronic device, the electronic device comprises a camera array and a high-resolution multispectral camera, and the method comprises:
when a first camera and the high-resolution multispectral camera are simultaneously enabled, capturing a first image by using the first camera, wherein the first image is a raw image of a first scene, the first image is a three-channel image, and the camera array comprises the first camera;
synchronously capturing a second image by using the high-resolution multispectral camera, wherein the second image is a multispectral raw image of the first scene, the second image is an M-channel image, and M is a positive integer greater than 3;
converting the second image from the M-channel image to a three-channel image by using a first transformation function;
performing color calibration on the first image by using the three-channel image obtained by converting the second image as a reference, to obtain a first color parameter; and
delivering the first color parameter to an image signal processor ISP pipeline of the first camera, so that the first camera performs, based on the first color parameter, color adjustment on an image captured by the first camera.

2. The method according to claim 1, wherein the camera array further comprises a second camera, and the method further comprises:
capturing a third image by using the second camera, wherein the third image is a raw image of the first scene, and the third image is a three-channel image;
performing color calibration on the third image by using the three-channel image obtained by converting the second image as a reference, to obtain a second color parameter; and
delivering the second color parameter to an image signal processor ISP pipeline of the second camera, so that the second camera performs, based on the second color parameter, color adjustment on an image captured by the second camera.

3. The method according to claim 1, wherein the camera array further comprises a second camera, and the method further comprises:
when the second camera and the high-resolution multispectral camera are simultaneously enabled, capturing a third image by using the second camera, wherein the third image is a raw image of a second scene, and the third image is a three-channel image;
synchronously capturing a fourth image by using the high-resolution multispectral camera, wherein the fourth image is a multispectral raw image of the second scene, and the fourth image is an M-channel image;
converting the fourth image from the M-channel image to a three-channel image by using a second transformation function;
performing color calibration on the third image by using the three-channel image obtained by converting the fourth image as a reference, to obtain a second color parameter; and
delivering the second color parameter to an image signal processor ISP pipeline of the second camera, so that the second camera performs, based on the second color parameter, color adjustment on an image captured by the second camera.

4. The method according to claim 2 or 3, wherein the first camera is any one of a primary camera, an ultra-wide-angle camera, and a long-focus camera, the second camera is any one of a primary camera, an ultra-wide-angle camera, and a long-focus camera, and the first camera is different from the second camera.

5. The method according to any one of claims 1 to 4, wherein converting the second image from the M-channel image to the three-channel image by using the first transformation function comprises:
converting the second image from the M-channel image to the three-channel image by downsampling M channels of the second image to three channels of the first image based on the first transformation function, wherein the first transformation function is a function that performs matrix multiplication between the second image and a downsampling matrix with a size of M×3.

6. The method according to claim 5, wherein before converting the second image from the M-channel image to the three-channel image by using the first transformation function, the method further comprises:
performing field of view FOV alignment on the first image and the second image.

7. The method according to claim 6, wherein the method further comprises:
determining the first transformation function based on the FOV-aligned second image.

8. The method according to any one of claims 1 to 4, wherein converting the second image from the M-channel image to the three-channel image by using the first transformation function comprises:
performing spectral super-resolution on the second image based on a spectral sensitivity curve corresponding to the second image, to obtain a hyperspectral image corresponding to the second image, wherein the hyperspectral image corresponding to the second image is an N-channel image, and N is a positive integer far greater than M; and
converting, based on the first transformation function, the hyperspectral image corresponding to the second image from the N-channel image to the three-channel image by downsampling N channels of the hyperspectral image corresponding to the second image to three channels of the first image, wherein the first transformation function is a function that performs matrix multiplication between the second image and a downsampling matrix with a size of N×3.

9. The method according to claim 8, wherein the method further comprises:
determining the first transformation function based on the hyperspectral image corresponding to the second image and a spectral sensitivity curve corresponding to the first image.

10. The method according to any one of claims 1 to 9, wherein the first color parameter comprises any one or more of an auto white balance parameter, a color adjustment parameter, a color calibration parameter, and a 3D lookup table.

11. An electronic device, wherein the electronic device comprises a camera array, a high-resolution multispectral camera, and a processor, and the camera array comprises a first camera, wherein
the first camera is configured to capture a first image when the first camera and the high-resolution multispectral camera are simultaneously enabled, the first image is a raw image of a first scene, and the first image is a three-channel image;
the high-resolution multispectral camera is configured to synchronously capture a second image, the second image is a multispectral raw image of the first scene, the second image is an M-channel image, and M is a positive integer greater than 3;
the processor is configured to convert the second image from the M-channel image to a three-channel image by using a first transformation function;
the processor is further configured to perform color calibration on the first image by using the three-channel image obtained by converting the second image as a reference, to obtain a first color parameter; and
the processor is further configured to deliver the first color parameter to an image signal processor ISP pipeline of the first camera, so that the first camera is capable of performing, based on the first color parameter, color adjustment on an image captured by the first camera.

12. The electronic device according to claim 11, wherein the camera array further comprises a second camera, wherein
the second camera is configured to capture a third image, the third image is a raw image of the first scene, and the third image is a three-channel image;
the processor is further configured to perform color calibration on the third image by using the three-channel image obtained by converting the second image as a reference, to obtain a second color parameter; and
the processor is further configured to deliver the second color parameter to an image signal processor ISP pipeline of the second camera, so that the second camera performs, based on the second color parameter, color adjustment on an image captured by the second camera.

13. The electronic device according to claim 11, wherein the camera array further comprises a second camera, wherein
the second camera is configured to: when the second camera and the high-resolution multispectral camera are simultaneously enabled, capture a third image by using the second camera, the third image is a raw image of a second scene, and the third image is a three-channel image;
the high-resolution multispectral camera is further configured to synchronously capture a fourth image, the fourth image is a multispectral raw image of the second scene, and the fourth image is an M-channel image;
the processor is further configured to convert the fourth image from the M-channel image to a three-channel image by using a second transformation function;
the processor is further configured to perform color calibration on the third image by using the three-channel image obtained by converting the fourth image as a reference, to obtain a second color parameter; and
the processor is further configured to deliver the second color parameter to an image signal processor ISP pipeline of the second camera, so that the second camera is capable of performing, based on the second color parameter, color adjustment on an image captured by the second camera.

14. The electronic device according to claim 12 or 13, wherein the first camera is any one of a primary camera, an ultra-wide-angle camera, and a long-focus camera, the second camera is any one of a primary camera, an ultra-wide-angle camera, and a long-focus camera, and the first camera is different from the second camera.

15. The electronic device according to any one of claims 11 to 14, wherein the processor is specifically configured to:
convert the second image from the M-channel image to the three-channel image by downsampling M channels of the second image to three channels of the first image based on the first transformation function, wherein the first transformation function is a function that performs matrix multiplication between the second image and a downsampling matrix with a size of M×3.

16. The electronic device according to claim 15, wherein the processor is further specifically configured to:
before converting the second image from the M-channel image to the three-channel image by using the first transformation function, perform field of view FOV alignment on the first image and the second image.

17. The electronic device according to claim 16, wherein the processor is further configured to:
determine the first transformation function based on the FOV-aligned second image.

18. The electronic device according to any one of claims 11 to 14, wherein the processor is specifically configured to:
perform spectral super-resolution on the second image based on a spectral sensitivity curve corresponding to the second image, to obtain a hyperspectral image corresponding to the second image, wherein the hyperspectral image corresponding to the second image is an N-channel image, and N is a positive integer far greater than M; and
convert, based on the first transformation function, the hyperspectral image corresponding to the second image from the N-channel image to the three-channel image by downsampling N channels of the hyperspectral image corresponding to the second image to three channels of the first image, wherein the first transformation function is a function that performs matrix multiplication between the second image and a downsampling matrix with a size of N×3.

19. The electronic device according to claim 18, wherein the processor is further configured to:
determine the first transformation function based on the hyperspectral image corresponding to the second image and a spectral sensitivity curve corresponding to the first image.

20. The electronic device according to any one of claims 11 to 19, wherein the first color parameter comprises any one or more of an auto white balance parameter, a color adjustment parameter, a color calibration parameter, and a 3D lookup table.

21. An electronic device, comprising:
one or more processors;
one or more memories; and
one or more computer programs, wherein the one or more computer programs are stored in the one or more memories, the one or more computer programs comprise instructions, and when the instructions are executed by the one or more processors, the electronic device is enabled to perform the method according to any one of claims 1 to 10.

22. A computer-readable storage medium, wherein the storage medium stores a program or instructions, and when the program or the instructions are run, the method according to any one of claims 1 to 10 is implemented.

23. A chip, wherein the chip stores instructions, and when the instructions are run, the method according to any one of claims 1 to 10 is implemented.

24. A computer program product, wherein the computer program product stores a program or instructions, and when the program or the instructions are run, the method according to any one of claims 1 to 10 is implemented.
